(19) Europäisches Patentamt
European Patent Office
Office européen des brevets

(11) **EP 4 786 654 A1**

(12) **EUROPEAN PATENT APPLICATION**
published in accordance with Art. 153(4) EPC

(43) Date of publication:
**05.08.2026 Bulletin 2026/32**

(21) Application number: **24872494.0**

(22) Date of filing: **27.09.2024**

(51) International Patent Classification (IPC):
*C25B 7/00* (2006.01)    *B01D 61/46* (2006.01)
*B01D 61/54* (2006.01)    *B01D 69/02* (2006.01)
*C02F 1/469* (2023.01)    *C22B 3/02* (2006.01)
*C22B 26/12* (2006.01)    *C25B 9/00* (2021.01)
*C25B 13/04* (2021.01)

(52) Cooperative Patent Classification (CPC):
**C22B 26/12; B01D 61/44; B01D 61/46;**
**B01D 61/461; B01D 61/464; B01D 61/468;**
**B01D 61/52; C22B 3/22; H01M 10/54;**
B01D 2313/365; Y02W 30/84

(86) International application number:
**PCT/JP2024/034614**

(87) International publication number:
**WO 2025/070712 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.09.2023 JP 2023170971**

(71) Applicant: **HIROSAKI UNIVERSITY**
**Hirosaki-shi, Aomori 036-8560 (JP)**

(72) Inventors:
• **Sasaki, Kazuya**
**Hirosaki-shi, Aomori 036-8560 (JP)**
• **Shinmura, Kiyoto**
**Hirosaki-shi, Aomori 036-8560 (JP)**

(74) Representative: **Simmons & Simmons LLP**
**(Munich)**
**Lehel Carré**
**Gewürzmühlstraße 11**
**80538 Munich (DE)**

(54) **LITHIUM RECOVERY DEVICE, MULTI-CHAMBER LITHIUM RECOVERY DEVICE, AND LITHIUM RECOVERY METHOD**

(57) In a lithium recovery device 1, a treatment tank 7 is partitioned into three chambers in the order of chambers 11, 12, 13 by means of an ion conductive film 31 and a lithium ion conductive electrolyte film 2. A power supply 5 is connected between electrodes 41, 42 respectively provided inside the chambers 11, 13 located at both ends, with a first electrode chamber 11 side as a positive side. Water S1 is accommodated in the first electrode chamber 11, a non-aqueous solution FS having Li is accommodated in the Li supply chamber 12, and an aqueous solution RS for Li recovery is accommodated in the Li recovery chamber 13. When a voltage is applied by the power supply 5, H$^+$ passes through the ion conductive film 31 from the water S1 and moves to the Li-containing non-aqueous solution FS. In the Li-containing non-aqueous solution FS supplied with H$^+$, in order to keep charge balance, Li$^+$ moves into the lithium ion conductive electrolyte film 2, and Li$^+$ in the lithium ion conductive electrolyte film 2 moves to the aqueous solution RS for Li recovery.

FIG. 2

**Description**

**TECHNICAL FIELD**

The present invention relates to a lithium recovery device and a lithium recovery method for selectively recovering lithium ions from a non-aqueous solution.

**BACKGROUND ART**

Lithium (Li) is a resource in high demand as a raw material for lithium-ion secondary batteries, a fuel for nuclear fusion reactors, and the like. There is a need for a less expensive that can provide a stable supply of lithium. Stable sources of Li include seawater and the like with Li dissolved in the form of cations. A positive electrode of a lithium-ion secondary battery mainly contains Li in the form of lithium cobalt oxide ($LiCoO_2$), leading to expectations for a less expensive recovery technology from batteries discarded due to the end of battery life or the like (waste batteries). Although adsorption methods have heretofore been used to recover Li from seawater and the like, recovery through electrodialysis using a lithium ion-conducting electrolyte membrane has been developed as a more selective method (for example, Patent Literatures 1 to 3 and Non-Patent Literature 1).

An example of a method for recovering Li through electrodialysis, which is described in Patent Literature 1 and the like, will be described with reference to FIG. 25. A lithium recovery device 101 is equipped with a processing tank 107 partitioned into a Li supply chamber 112 and a Li recovery chamber 113 by a lithium ion-conducting electrolyte membrane (hereinafter referred to as an electrolyte membrane) 2. The lithium recovery device 101 is also equipped with a power supply 105 connected between an electrode 141 in the Li supply chamber 112 and an electrode 142 in the Li recovery chamber 113 with the electrode 141 as a positive electrode. A Li-containing aqueous solution SW such as seawater is charged into the Li supply chamber 112 as a Li source, and a Li recovery aqueous solution RS such as pure water is charged into the Li recovery chamber 113. Lithium ions ($Li^+$) and other metal ions ($M^{n+}$), hydrogen ions ($H^+$), as well as hydroxide ions ($OH^-$) and other negative ions such as chloride ions ($Cl^-$) and sulfate ions ($SO_4^{2-}$) dissolve into the Li-containing aqueous solution SW.

Voltage application by the power supply 105 causes the reaction of Formula (1) below near the electrode 141 in the Li-containing aqueous solution SW in the Li supply chamber 112, thus generating oxygen ($O_2$). The reaction of Formula (2) below also occurs on the surface of the electrolyte membrane 2. When the Li-containing aqueous solution SW contains $Cl^-$, chlorine ($Cl_2$) is further generated near the electrode 141. On the other hand, in the Li recovery aqueous solution RS in the Li recovery chamber 113, the reaction of Formula (3) below occurs on the surface (rear surface) of the electrolyte membrane 2, and the reaction of Formula (4) below occurs near the electrode 142, thus generating hydrogen ($H_2$). In each formula, lithium ions ($Li^+$) contained in the electrolyte membrane 2 (electrolyte) are expressed as $Li^+$ (electrolyte). Other ions ($Li^+$, $H^+$, $OH^-$) represent those dissolved in the aqueous solution. Formula (2) below shows a reaction where $Li^+$ in the aqueous solution migrates into the electrolyte membrane 2. Formula (3) below shows a reaction where $Li^+$ in the electrolyte membrane 2 migrates into the aqueous solution. An electrochemical potential difference of $Li^+$ contained in the Li-containing aqueous solution SW, the electrolyte membrane 2, and the Li recovery aqueous solution RS causes $Li^+$ to permeate the electrolyte membrane 2 from the Li-containing aqueous solution SW and migrate into the Li recovery aqueous solution RS. The electrolyte membrane 2 does not allow metal ions $M^{n+}$ such as $Na^+$ and $Ca^{2+}$ with a larger diameter than $Li^+$ to permeate therethrough, since the size of its lattice defect site is small. This selectively moves $Li^+$ from the Li-containing aqueous solution SW to the Li recovery aqueous solution RS, thus obtaining a $Li^+$ aqueous solution (lithium hydroxide aqueous solution) in the Li recovery chamber 113.

[Chem. 1]

$$2OH^- \rightarrow H_2O + \frac{1}{2}O_2 \uparrow + 2e^- \quad \cdots \quad (1)$$

$$Li^+ \rightarrow Li^+(\text{electrolyte}) \qquad (2)$$

$$Li^+(\text{electrolyte}) \rightarrow Li^+ \qquad (3)$$

$$2H_2O + 2e^- \rightarrow 2OH^- + H_2 \uparrow \qquad (4)$$

**CITATION LIST**

**Patent Literature**

Patent Literature 1: Japanese Patent No. 6233877
Patent Literature 2: JP2019-141807A
Patent Literature 3: International Publication No. 2022/239864

**Non-Patent Literature**

Non-Patent Literature 1: Kunugi S., Inaguma Y., Itoh M., "Electrochemical recovery and isotope separation of lithium ion employing lithium ion conductive perovskite-type oxides", Solid State Ionics, Vol. 122, Issues 1-4, pp. 35-39, July 1999

## SUMMARY OF INVENTION

**Technical Problem**

In the Li recovery method using electrodialysis, an aqueous solution such as seawater or an acid containing dissolved waste batteries is used as a Li supply source to release electrons e- from an anode, as shown in the reaction of Formula (1), thus decomposing it to generate hydroxide ion (OH⁻) as anions. Meanwhile, a Li-containing waste liquid generated during the manufacturing process of lithium-ion secondary batteries is a non-aqueous solution consisting mainly of electrolyte and containing Li salts such as $LiPF_6$ dissolved in an organic solvent such as ethylene carbonate (EC). In an attempt to recover Li from such waste liquid using electrodialysis, the organic solvent as a solvent is decomposed, making it impossible to recover the organic solvent for reuse. Furthermore, the decomposition of the organic solvent requires the application of high voltage, resulting in a large-scale device. As described above, to recover Li from waste batteries, the batteries are crushed and dissolved in a strong acid such as sulfuric acid ($H_2SO_4$). However, if the Li supply source is an aqueous solution with a low pH, the electrodialysis (Li recovery) proceeds slowly. On the other hand, if sodium hydroxide (NaOH) or the like is added to raise the pH, the highly alkaline aqueous solution after Li extraction needs to be neutralized before discharge, which, together with NaOH, increases costs. An additional process is also required to remove the organic solvent in the electrolyte by roasting before dissolving the waste batteries in acid.

The present invention has been made in view of the above problems, and an object thereof is to provide a lithium recovery method and a lithium recovery device capable of recovering lithium from a non-aqueous solution in which lithium is dissolved in an organic solvent by electrodialysis in a state where the organic solvent can be recovered.

**Solution to Problem**

A lithium recovery device according to the present invention is a lithium recovery device including: a processing tank partitioned into a first chamber, a second chamber, and a third chamber in this order; a lithium ion-conducting electrolyte membrane that partitions the processing tank into the first chamber and the second chamber; a first ion-conducting membrane that partitions the processing tank into the second chamber and the third chamber; a first electrode provided in the third chamber; a second electrode provided in a partitioned chamber at an end opposite to the third chamber in the processing tank; and a power supply having a positive electrode connected to the first electrode and a negative electrode connected to the second electrode, wherein lithium ions migrate from a non-aqueous solution containing lithium ions stored in the second chamber to water or an organic solvent stored in the first chamber. In the lithium recovery device, the first ion-conducting membrane conducts at least one type of cations other than lithium ions or at least one type of anions that are water-soluble and contained in the non-aqueous solution, and the third chamber stores water.

Another lithium recovery device according to the present invention is a lithium recovery device including: a processing tank partitioned into a second chamber, a first chamber, and a third chamber in this order; a lithium ion-conducting electrolyte membrane that partitions the processing tank into the first chamber and the second chamber; a second ion-conducting membrane that does not conduct lithium ions and partitions the processing tank into the first chamber and the third chamber; a first electrode provided in the second chamber; a second electrode provided in the third chamber; and a power supply having a positive electrode connected to the first electrode and a negative electrode connected to the second electrode, wherein lithium ions migrate from a non-aqueous solution containing lithium ions stored in the second chamber to water or an organic solvent stored in the first chamber, the third chamber stores water, and the second chamber also stores water.

A multi-chamber lithium recovery device according to the present invention includes: two or more lithium ion-conducting electrolyte membranes; a first ion-conducting membrane disposed at one end side of the lithium ion-conducting electrolyte membrane disposed foremost from the one end; a second ion-conducting membrane that does not conduct lithium ions and is disposed between the lithium ion-conducting electrolyte membranes; a processing tank partitioned into five or more chambers by the first ion-conducting membrane, the lithium ion-conducting electrolyte membranes, and the second ion-conducting membrane; a first electrode disposed in the chamber at the one end, and a second electrode disposed in the chamber at the other end, which are partitioned in the processing tank; and a power supply having a positive electrode connected to the first electrode and a negative electrode connected to the second electrode, wherein the partitioned chamber at the one end in the processing tank stores water, and lithium ions migrate from a non-aqueous solution containing lithium ions stored in one chamber at the one end side of two neighboring chambers partitioned by the lithium ion-conducting electrolyte membrane to water stored in the chamber at the other end.

A lithium recovery method according to the present invention is a method for moving lithium ions contained in a non-aqueous solution stored in a second chamber to water or an organic solvent stored in a first chamber, which is partitioned into the first chamber and the second chamber in a processing tank by a lithium ion-conducting electrolyte membrane, , wherein the processing tank is further partitioned into the second chamber and a third chamber by a first ion-conducting membrane that conducts at least one type of cations other than lithium ions, or at least one type of anions that are water-soluble and contained in the non-aqueous solution, the third chamber stores water, and a power supply connected with a first electrode provided in the third chamber as a positive electrode applies a voltage between the first electrode and a second electrode provided in a partitioned chamber at an end opposite to the third chamber in the processing tank.

Another lithium recovery method according to the present invention is a method for moving lithium ions contained in a non-aqueous solution stored in a second chamber to water or an organic solvent stored in a first chamber which is partitioned into the first chamber and the second chamber in a processing tank by a lithium ion-conducting electrolyte membrane, wherein the second chamber also stores water, and a power supply connected with a first electrode provided in the second chamber as a positive electrode applies a voltage between the first electrode and a second electrode provided in a partitioned chamber at an end opposite to the second chamber in the processing tank.

Another lithium recovery method according to the present invention is a method for moving lithium ions from a non-aqueous solution containing lithium ions stored in one chamber of neighboring two chambers partitioned by a lithium-ion-conducting electrolyte membrane to water stored in the other chamber, in a processing tank partitioned into five or more chambers by ion-conducting membranes and lithium ion-conducting electrolyte membranes disposed alternately from one end side, wherein ion-conducting membranes disposed between the lithium ion-conducting electrolyte membranes do not conduct lithium ions, the partitioned chamber at the one end in the processing tank stores water, a power supply connected with a first electrode provided in the partitioned chamber at the one end in the processing tank as a positive electrode applies a voltage between the first electrode and a second electrode provided in the chamber at the other end, and lithium ions migrate from a non-aqueous solution containing lithium ions stored in one chamber at the one end side of the neighboring two chambers to water stored in the chamber at the other end side.

**Advantageous Effects of Invention**

The lithium recovery device and the lithium recovery method according to the present invention make it possible to utilize an organic solvent with a Li salt dissolved therein as a Li supply source.

**BRIEF DESCRIPTION OF DRAWINGS**

FIG. 1 is a schematic diagram for explaining a configuration of a lithium recovery device according to a first embodiment of the present invention.
FIG. 2 is a schematic diagram of the lithium recovery device shown in FIG. 1, for explaining a lithium recovery method according to the first embodiment of the present invention.
FIG. 3 is a schematic diagram showing a configuration of a lithium recovery device and a lithium recovery method according to a modification of the first embodiment of the present invention.
FIG. 4 is a schematic diagram showing a configuration of a lithium recovery device and a lithium recovery method according to a modification of the first embodiment of the present invention.
FIG. 5 is a schematic diagram for explaining a configuration of a lithium recovery device according to a second embodiment of the present invention.
FIG. 6 is a schematic diagram of the lithium recovery device shown in FIG. 5, for explaining a lithium recovery method according to the second embodiment of the present invention.
FIG. 7 is a schematic diagram for explaining a configuration of a lithium recovery device according to a third embodiment of the present invention.

FIG. 8 is a schematic diagram of the lithium recovery device shown in FIG. 7, for explaining a lithium recovery method according to the third embodiment of the present invention.

FIG. 9 is a schematic diagram showing a configuration of a lithium recovery device and a lithium recovery method according to a modification of the third embodiment of the present invention.

FIG. 10 is a schematic diagram for explaining a configuration of a lithium recovery device according to a fourth embodiment of the present invention.

FIG. 11 is a schematic diagram of the lithium recovery device shown in FIG. 10, for explaining a lithium recovery method according to the fourth embodiment of the present invention.

FIG. 12 is a schematic diagram for explaining a configuration of a lithium recovery device according to a fifth embodiment of the present invention.

FIG. 13 is a schematic diagram of the lithium recovery device shown in FIG. 12, for explaining a lithium recovery method according to the fifth embodiment of the present invention.

FIG. 14 is a schematic diagram showing a configuration of a lithium recovery device and a lithium recovery method according to a modification of the fifth embodiment of the present invention.

FIG. 15 is a schematic diagram for explaining a configuration of a lithium recovery device according to a sixth embodiment of the present invention.

FIG. 16 is a schematic diagram of the lithium recovery device shown in FIG. 15, for explaining a lithium recovery method according to the sixth embodiment of the present invention.

FIG. 17 is a schematic diagram showing a configuration of a lithium recovery device and a lithium recovery method according to a modification of the sixth embodiment of the present invention.

FIG. 18 is a schematic diagram for explaining a configuration of a multi-chamber lithium recovery device according to an embodiment of the present invention.

FIG. 19 is a schematic diagram of the multi-chamber lithium recovery device shown in FIG. 18, for explaining a lithium recovery method according to the embodiment of the present invention.

FIG. 20 is a schematic diagram showing a configuration of a multi-chamber lithium recovery device and a lithium recovery method according to a modification of the embodiment of the present invention.

FIG. 21 is a schematic diagram showing a configuration of a multi-chamber lithium recovery device and a lithium recovery method according to a modification of the embodiment of the present invention.

FIG. 22 is a schematic diagram showing a configuration of a multi-chamber lithium recovery device and a lithium recovery method according to a modification of the embodiment of the present invention.

FIG. 23 is a graph showing the transition of lithium recovery amount per hour in an example and a comparative example of the lithium recovery device according to the present invention.

FIG. 24 is a graph showing the transition of lithium recovery amount per hour in an example of the lithium recovery device according to the present invention.

FIG. 25 is a schematic diagram of a lithium recovery device for explaining an example of a lithium recovery method for recovering lithium from an aqueous solution, using electrodialysis.

## DESCRIPTION OF EMBODIMENTS

Hereinafter, embodiments of a lithium recovery device and a lithium recovery method according to the present invention will be described with reference to the drawings. In the drawings, the sizes and the like of specific components may be exaggerated, or the shapes thereof may be simplified for clarity of explanation. In the following description of each embodiment, the same components as those in the previous embodiment are denoted by the same reference numerals, and descriptions thereof will be omitted as appropriate.

[First Embodiment]

[Lithium Recovery Device]

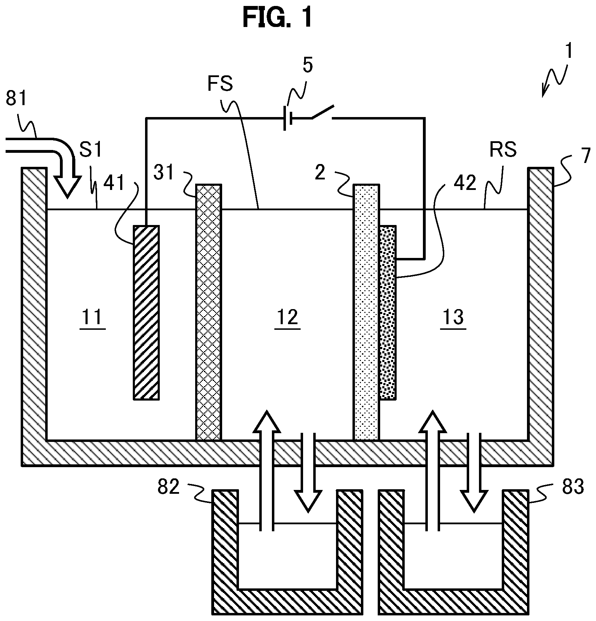

As shown in FIG. 1, a lithium recovery device 1 according to a first embodiment of the present invention includes: an electrolyte membrane (lithium ion-conducting electrolyte membrane) 2; an ion exchange membrane (first ion-conducting membrane) 31; a processing tank 7 partitioned by the ion exchange membrane 31 and the electrolyte membrane 2 into three chambers 11, 12, and 13 in this order; a first electrode 41 provided in the chamber (third chamber) 11 at one end of the processing tank 7; a second electrode 42 provided in the chamber (first chamber) 13 at the other end of the processing tank 7; and a power supply 5 connected between the electrodes 41 and 42 with the first electrode 41 as a positive electrode. The chamber (third chamber) 11 at one end partitioned by the ion exchange membrane 31 is a first electrode chamber, and stores an aqueous solution (water) S1. The chamber (second chamber) 12 in the middle is a Li supply chamber, and stores a Li-containing non-aqueous solution FS. The chamber (first chamber) 13 at the other end partitioned by the electrolyte membrane 2 is a Li recovery chamber, and stores a Li recovery aqueous solution RS. The lithium recovery device 1 may further include, as necessary, a water supply device 81 that supplies water (aqueous solution S1) to the first electrode chamber 11, and circulation devices 82 and 83 provided in the chambers 12 and 13, respectively. The lithium recovery device 1 moves lithium ions ($Li^+$) from the Li-containing non-aqueous solution FS stored in the Li supply chamber 12 to the Li recovery aqueous solution RS stored in the Li recovery chamber 13.

The Li-containing non-aqueous solution FS is a Li source and is a non-aqueous solution containing lithium ions ($Li^+$) and other metal ions $M^{n+}$, as well as their counterions, anions $A^{n-}$, in an organic solvent. Examples of such a non-aqueous solution include a waste liquid generated during the manufacturing process of lithium-ion secondary batteries and a solution prepared by crushing a used lithium-ion secondary battery (waste battery) and dissolving it in an organic solvent. Unlike the case of dissolving waste batteries in acid to recover metals such as Li, roasting is not required. The Li-containing non-aqueous solution FS, if it is the waste liquid, is composed mainly of a typical liquid electrolyte used in lithium-ion secondary batteries. The Li-containing non-aqueous solution FS may contain metal ions $M^{n+}$ other than $Li^+$, and may also contain an organic solvent or the like for cleaning. The Liquid electrolyte is a non-aqueous solution prepared by dissolving a Li salt such as $LiPF_6$, $LiClO_4$, $LiBF_4$, $LiN(CF_3SO_2)_2$, and $LiN(C_2F_5SO_2)_2$ in an organic solvent such as ethylene carbonate (EC), propylene carbonate (PC), $\gamma$-butyrolactone, dimethyl carbonate (DMC), diethyl carbonate (DEC), ethyl methyl carbonate (EMC), 1,2-dimethoxyethane (DME), and acetonitrile. As with the organic solvent used in the liquid electrolyte, the organic solvent for cleaning or dissolving a waste battery can be made of EC, PC, N-methyl-2-pyrrolidone (NMP) or the like. In such a non-aqueous solution, the Li salt exists as $Li^+$ and its counterions. The counterions of $Li^+$ include hexafluorophosphate ions ($PF_6^-$), tetrafluoroborate ions ($BF_4^-$), bis(fluorosulfonyl)amide ions (($FSO_2)_2N^-$;$FSA^-$), trifluoromethylsulfonylamide ions (($CF3SO_2)_2N^-$;$TFSA^-$), perchlorate ions ($ClO_4^-$), and the like. The Li-containing non-aqueous solution FS, if it is a solution of the waste battery, contains $Co^{2+}$, $Fe^{2+}$, $Cu^{2+}$, $Al^{3+}$, $Ni^{2+}$ or the like as the metal ions $M^{n+}$ other than $Li^+$, as well as the above anions as counterions, as with $Li^+$.

The Li recovery aqueous solution RS is a solution for storing $Li^+$ recovered from the Li-containing non-aqueous solution FS. To selectively obtain only Li from metals, the Li recovery aqueous solution RS is preferably an aqueous solution that does not contain metal ions (such as $Na^+$) other than $Li^+$, more preferably an aqueous solution that does not contain anions other than $OH^-$, especially halide ions, and may be pure water, for example, at the start of operation of the lithium recovery device 1. However, to ensure smooth $Li^+$ migration immediately after the start of operation, the Li recovery aqueous solution RS is preferably an aqueous solution containing $Li^+$ (lithium hydroxide (LiOH) aqueous solution) at the start of operation of the lithium recovery device 1.

The aqueous solution S1 is a supply source of cations, such as hydrogen ions ($H^+$), to the Li-containing non-aqueous solution FS. The aqueous solution S1 is, for example, pure water at the start of operation of the lithium recovery device 1. Alternatively, to ensure smooth $H^+$ migration to the Li-containing non-aqueous solution FS, the aqueous solution S1 may be an acidic, neutral, or alkaline aqueous solution (electrolyte aqueous solution) that has a relatively high electron conductivity. Furthermore, it is preferable that the aqueous solution S1 does not have a lower pH (S1<RS) than the Li recovery aqueous solution RS after the start of operation. It is even more preferable that the aqueous solution S1 have a higher pH than the Li recovery aqueous solution RS. For this reason, it is preferable that the aqueous solution S1 be an alkaline aqueous solution.

The electrolyte membrane 2 is an electrolyte having lithium ion conductivity and is provided to partition the processing tank 7 into the Li supply chamber 12 and the Li recovery chamber 13. Specifically, the electrolyte membrane 2 is an electrolyte that conducts $Li^+$ but does not conduct metal ions $M^{n+}$ other than $Li^+$ contained in the Li-containing non-aqueous solution FS, and preferably does not conduct electrons $e^-$. The electrolyte membrane 2 is more preferably an electrolyte made of ceramics having these properties, specifically, lithium lanthanum titanium oxide ($La_{2/3-x}Li_{3x}TiO_3$, also referred to as LLTO) or the like. Such an electrolyte membrane 2 has a certain proportion of lattice defects. The size of these lattice defect sites is small. This prevents the electrolyte membrane 2 from conducting the metal ions $M^{n+}$ other than $Li^+$ since the metal ions have a larger diameter than $Li^+$.

The ion exchange membrane 31 is disposed so as to partition the processing tank 7 into the first electrode chamber 11 and the Li supply chamber 12, and conducts at least one type of cations, for example, $H^+$, other than lithium ions. This causes $H^+$ to be supplied from water ($H_2O$) as the aqueous solution S1 in the first electrode chamber 11 to the Li-containing non-aqueous solution FS in the Li supply chamber 12. The ion exchange membrane 31 is disposed sufficiently spaced apart from the electrolyte membrane 2, but the distance therebetween is preferably not long. By reducing the distance between the first electrode 41 and the second electrode 42, which are disposed so as to collectively sandwich the electrolyte membrane 2 and the ion exchange membrane 31, an electric field generated by the voltage applied by the power supply 5 can be strengthened. The ion exchange membrane 31 is resistant to the organic solvent contained in the Li-containing non-aqueous solution FS. The ion exchange membrane 31 can be a cation exchange membrane that permeates cations and blocks anions, a monovalent cation permselective ion exchange membrane that permeates monovalent cations only, a bipolar monovalent ion permselective ion exchange membrane that permeates monovalent ions, or the like. Furthermore, when the aqueous solution S1 is a neutral or alkaline aqueous solution containing cations (metal ions) other than H⁺, the ion exchange membrane 31 is preferably a hydrogen ion permselective membrane (proton-conducting membrane) or a bipolar membrane for water splitting that selectively conducts H⁺, so as to prevent these metal ions from migrating into the Li-containing non-aqueous solution FS. Alternatively, when the aqueous solution S1 is a calcium hydroxide $(CA(OH)_2)$ aqueous solution, for example, containing metal ions with a valence of 2 or more, the ion exchange membrane 31 can be a monovalent cation permselective ion exchange membrane or the like that permeates monovalent ions.

Known ion exchange membranes can be used. For example, Nafion (registered trademark) can be used as the proton-conducting membrane and the cation exchange membrane. NEOSEPTA BP-1E (manufactured by Astom Co., Ltd.) can be used as the bipolar membrane for water splitting. SELEMION (registered trademark) CMV, CMVN, CMTE (manufactured by AGC Engineering Co., Ltd.) and NEOSEPTA CSE (manufactured by Astom Co., Ltd.) can be used as the cation exchange membrane. SELEMION (registered trademark) CSO (manufactured by AGC Engineering Co., Ltd.) and CXP-S (manufactured by Astom Co., Ltd.) can be used as the monovalent cation permselective ion exchange membrane. NEOSEPTA CIMS (manufactured by Astom Co., Ltd.) can be used as the bipolar monovalent ion permselective ion exchange membrane.

The first electrode 41 and the second electrode 42 are electrodes for applying a voltage between both surfaces of the ion exchange membrane 31 and between both surfaces of the electrolyte membrane 2, thus generating a potential difference that is lower on the Li recovery chamber 13 side. To this end, the electrodes 41 and 42 are provided in the chambers 11 and 13 at both ends of the processing tank 7, respectively.

As shown in FIG. 1, the first electrode 41 can be disposed spaced apart from the ion exchange membrane 31 in the first electrode chamber 11, allowing the aqueous solution S1 to come into contact with the entire surface of the ion exchange membrane 31. On the other hand, the shorter the distance between the first electrode 41 and the second electrode 42, the stronger the electric field generated by the voltage applied by the power supply 5. To prevent this distance from becoming too long, it is preferable that the distance between the first electrode 41 and the ion exchange membrane 31 is short. The first electrode 41 preferably has a net-like shape through which the liquid passes, so that the aqueous solution S1 in contact with the surface of the ion exchange membrane 31 is continuously circulated in the first electrode chamber 11. The first electrode 41 is preferably disposed parallel to the second electrode 42, with dimensions that allow voltage application to a wider region of the electrolyte membrane 2 together with the second electrode 42. The first electrode 41 is formed of an electrode material that has electron conductivity and is stable in the aqueous solution S1 even when a voltage is applied during operation of the lithium recovery device 1. The material constituting the first electrode 41 preferably has catalytic activity for the reaction of Formula (1) below when the aqueous solution S1 is pure water or an alkaline aqueous solution, and for the reaction of Formula (5) below when the aqueous solution S1 is a neutral or acidic aqueous solution. Furthermore, the material is preferably easily processed into the shape of the first electrode 41. Such an electrode material is preferably platinum (Pt), for example.

[Chem. 2]

$$2OH^- \rightarrow H_2O + \frac{1}{2}O_2 \uparrow + 2e^- \quad \cdots \quad (1)$$

$$H_2O \rightarrow \frac{1}{2}O_2 \uparrow + 2H^+ + 2e^- \quad \cdots \quad (5)$$

The second electrode 42 is provided in the Li recovery chamber 13 in contact with or spaced apart from and facing the electrolyte membrane 2, preferably disposed parallel to and close to the electrolyte membrane 2, and more preferably in contact with the electrolyte membrane 2 as shown in FIG. 1. The second electrode 42 preferably has dimensions that allow voltage application to a wider region of the electrolyte membrane 2. The second electrode 42 preferably has a porous structure such as a net through which a liquid passes, so that the Li recovery aqueous solution RS comes into contact with a sufficient area of the surface (rear surface) of the electrolyte membrane 2 on the Li recovery chamber 13 side, and so that the Li recovery aqueous solution RS in contact with the rear surface of the electrolyte membrane 2 is continuously circulated in the Li recovery chamber 13. The second electrode 42 may be formed directly on one side of the electrolyte membrane 2, or may be fixed to the processing tank 7 with a jig so as to come into contact with the electrolyte membrane 2. The second electrode 42 is formed of an electrode material that has electron conductivity and is stable in the Li recovery aqueous solution RS even when a voltage is applied, including after operation of the lithium recovery device 1 (after Li recovery). The material constituting the second electrode 42 is preferably a material that has catalytic activity for the reaction of Formula (4) below. When the second electrode 42 is provided in contact with the electrolyte membrane 2, it is preferable that the material also has catalytic activity for the reaction of Formula (3) below. Furthermore, the material is preferably easily processed into the shape of the second electrode 42. Such an electrode material is preferably platinum (Pt), for example, or can be carbon (C), copper (Cu), nickel (Ni), or stainless steel, which is stable at a potential lower than the potential at which the reaction of Formula (4) below occurs. The second electrode 42 can be, more preferably, made of a material carrying Pt fine particles on the surface of such materials, which function as a catalyst.

[Chem. 3]

$$2H_2O + 2e^- \rightarrow 2OH^- + H_2 \uparrow \cdot \qquad (4)$$

$$Li^+(electrolyte) \rightarrow Li^+ \qquad (3)$$

The power supply 5 is a DC power supply unit and is connected between the electrodes 41 and 42 with the Li recovery chamber 13 side as the negative side. Specifically, the power supply 5 has a positive electrode connected to the first electrode 41 and a negative electrode connected to the second electrode 42. The power supply 5 applies a voltage between both surfaces of the ion exchange membrane 31 and between both surfaces of the electrolyte membrane 2 to cause H+ contained in the aqueous solution S1 to migrate into the Li-containing non-aqueous solution FS and to generate a potential gradient for causing the electrolyte membrane 2 to conduct $Li^+$.

The processing tank 7 is made of a material that does not undergo deterioration such as dissolution or corrosion even when coming into contact with the Li-containing non-aqueous solution FS and the Li recovery aqueous solution RS including after operation of the lithium recovery device 1 (after Li recovery). For example, the Li recovery aqueous solution RS is a lithium hydroxide (LiOH) aqueous solution. Examples of such a material include glass, stainless steel, polypropylene (PP), and polyether ether ketone (PEEK) resin. The processing tank 7 only needs to have a volume corresponding to required processing capacity, and its shape and the like are not particularly limited.

The water supply device 81 supplies water to the first electrode chamber 11. The water supply device 81 replenishes water, since the reaction of Formula (1) or Formula (5) reduces water in the aqueous solution S1 during operation. The water supply device 81 may supply pure water, the aqueous solution S1, or an ionic compound, thereby adjusting the pH and conductivity of the aqueous solution S1. While FIG. 1 shows the water supply device 81 supplying water from above the processing tank 7, this is merely a schematic illustration and not intended to specify the arrangement or structure.

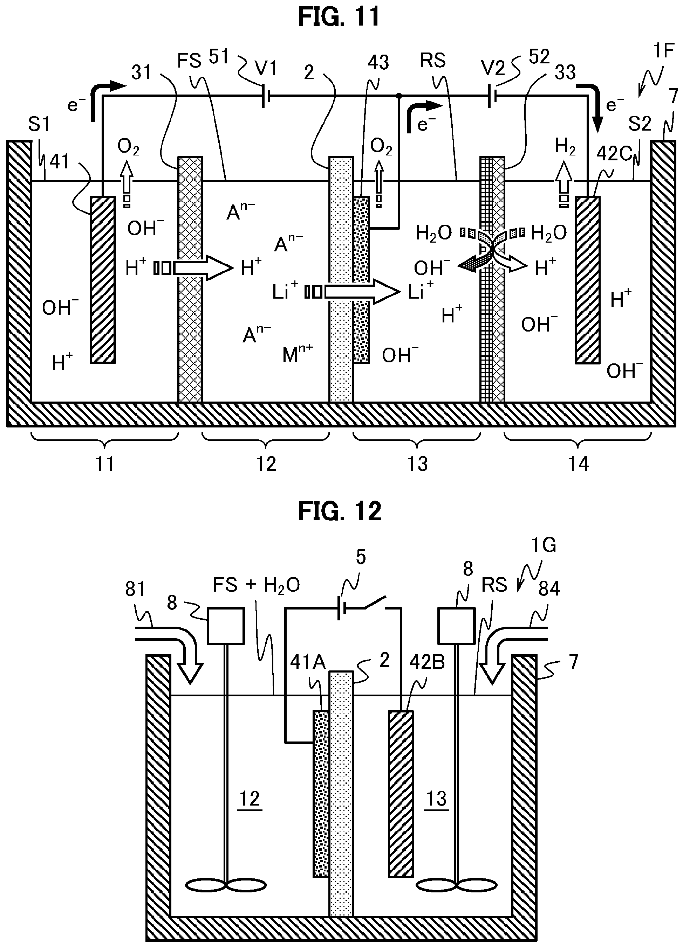

The circulation device 82 is a circulation device that circulates the Li-containing non-aqueous solution FS in the Li supply chamber 12 so that the Li-containing non-aqueous solution FS is continuously replaced during operation. The circulation device 82 includes a circulation tank provided outside the processing tank 7 and a pump for circulating the Li-containing non-aqueous solution FS between the tank and the Li supply chamber 12. Specifically, the circulation device 82 is not limited in configuration so long as the circulation device is arranged so that the pump can circulate or supply a liquid in the circulation tank through a circulation path such as a pipe communicating with the Li supply chamber 12. FIG. 1 shows a state where the circulation device 82 is arranged below the processing tank 7, and supplies and discharges the Li-containing non-aqueous solution FS from the bottom of the processing tank 7. This is, however, merely a schematic illustration and not intended to specify the arrangement or structure. The same applies to the circulation device 83. The circulation device 82 also stirs the Li-containing non-aqueous solution FS in the Li supply chamber 12 so that the Li-containing non-aqueous solution FS in contact with the electrolyte membrane 2 is continuously replaced. The circulation device 82 also compensates for a decrease in the liquid volume in the Li supply chamber 12 as necessary. Furthermore, the circulation device 82 can supply a large amount of Li-containing non-aqueous solution FS relative to the volume of the Li supply chamber 12 of the processing tank 7, thereby suppressing a decrease in the $Li^+$ concentration of the Li-containing non-aqueous solution FS during operation. As described above, in this embodiment, to shorten the distance between the first electrode 41 and the second electrode 42, it is preferable that the distance between the ion exchange membrane 31 and the electrolyte membrane 2 is not long, that is, the volume of the Li supply chamber 12 is not large. Alternatively, the circulation device 82 can be configured as necessary using a stirring device 8 (see FIG. 12) equipped with a screw rotated in the Li supply chamber 12.

The circulation device 83 circulates the Li recovery aqueous solution RS in the Li recovery chamber 13 so that the Li recovery aqueous solution RS is continuously replaced, and compensates for any decrease in the liquid volume in the Li recovery chamber 13. The circulation device 83 may have the same configuration as that of the circulation device 82. During operation, the reaction of Formula (4) reduces water in the Li recovery aqueous solution RS, and the circulation device 83 compensates for this decrease. The circulation device 83 also stirs the Li recovery aqueous solution RS in the Li recovery chamber 13 so that the Li recovery aqueous solution RS in contact with the electrolyte membrane 2 and the second electrode 42 is continuously replaced. The circulation device 83 may further include a precipitation tank that precipitates $Li^+$ in the Li recovery aqueous solution RS, and a strainer that prevents the precipitate from returning to the Li recovery chamber 13. Alternatively, the circulation device 83 can be a water supply device that supplies water to the Li recovery chamber 13, such as the water supply device 81, and may further include the stirring device 8 (see FIG. 12) equipped with a screw rotated in the Li recovery chamber 13.

The lithium recovery device 1 may include a liquid level sensor or the like to sense changes in the amount of liquid in each of the chambers 11, 12, and 13 during operation. The lithium recovery device 1 may also include a pH meter for measuring the pH of each of the aqueous solutions S1 and RS during operation.

When carbon dioxide ($CO_2$) in the atmosphere unintentionally dissolves into the Li recovery aqueous solution RS and lithium carbonate ($Li_2CO_3$) or the like precipitates during operation, the conductivity of the Li recovery aqueous solution RS decreases. To prevent this, the lithium recovery device 1 is preferably configured so that the Li recovery aqueous solution RS is not exposed to the atmosphere. For safety reasons, the lithium recovery device 1 preferably further includes an exhaust unit that exhausts gases such as $O_2$ generated from the first electrode chamber 11 and $H_2$ from the Li recovery chamber 13 during operation, due to the reaction of Formula (1) or Formula (5) and the reaction of Formula (4), to prevent them from filling inside. When the Li-containing non-aqueous solution FS contains a volatile organic solvent, combustible, flammable, or toxic gases such as ethylene ($C_2H_4$) or propylene ($C_3H_6$) may be generated from the Li supply chamber 12. Therefore, it is preferable for safety reasons that the lithium recovery device 1 includes a unit for recovering these gases while preventing them from filling inside and leaking out. To this end, the lithium recovery device 1 preferably has check valves provided, for example, in the chambers 11, 12, and 13 of the processing tank 7, respectively, to exhaust the gases generated from the aqueous solutions S1, FS, and RS to the outside of the processing tank 7 and to prevent outside air from entering.

The lithium recovery device 1 may further include a heating or cooling device that heats or cools at least one of the Li recovery aqueous solution RS and the Li-containing non-aqueous solution FS. The heating or cooling device controls the temperature of one of the aqueous solutions RS and FS, and the temperatures of the electrolyte membrane 2 and one of those aqueous solutions through the other. The heating or cooling device can be a known device that heats or cools liquids. Such a heating or cooling device is of a throw-in type (immersion type), for example, and is installed so as to be immersed in the Li recovery aqueous solution RS in the Li recovery chamber 13. Alternatively, the heating or cooling device may heat or cool the aqueous solutions RS and FS in the circulation tanks of the circulation devices 82 and 83, and preferably has a temperature adjustment function. The heating or cooling device only needs to be able to bring the electrolyte membrane 2 to a predetermined temperature, and does not need to keep the Li recovery aqueous solution RS or the Li-containing non-aqueous solution FS at a uniform temperature. The temperature of the electrolyte membrane 2 may be at least the freezing point or lower than the boiling point of the aqueous solutions RS and FS. As described later, the higher the temperature of the electrolyte membrane 2, the faster the $Li^+$ migration in the electrolyte membrane 2. On the other hand, when the Li-containing non-aqueous solution FS contains a highly volatile organic solvent, it is preferable to suppress a rise in temperature of the electrolyte membrane 2 resulting from voltage application (operation).

[Lithium Recovery Method]

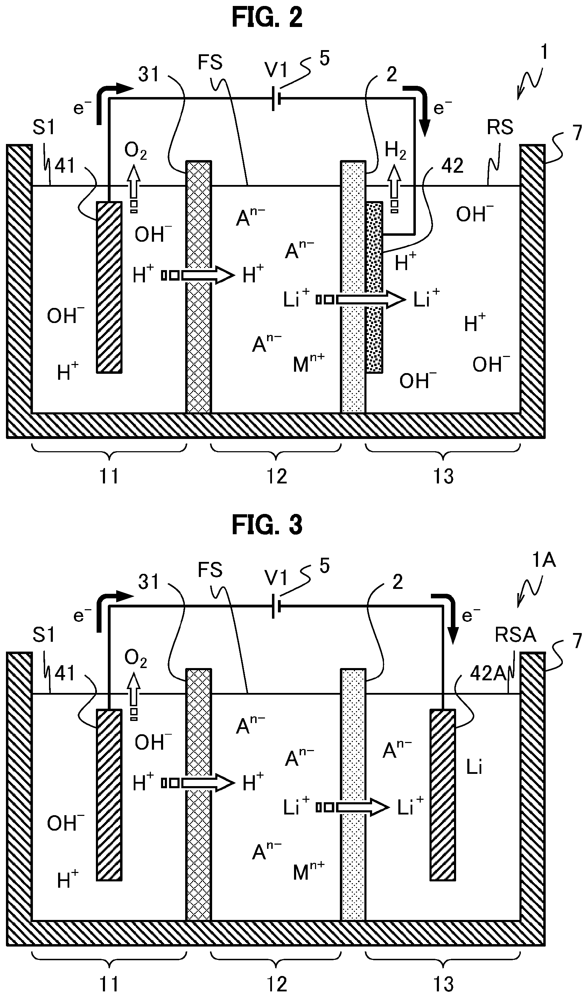

A lithium recovery method according to the first embodiment of the present invention will be described with reference to FIG. 2. The lithium recovery method according to this embodiment is performed as follows using the lithium recovery device 1. FIG. 2 omits the water supply device 81 and the circulation devices 82 and 83.

In the lithium recovery device 1, the power supply 5 applies a positive voltage V1 (+V1), with respect to the second electrode 42, to the first electrode 41. This application of the voltage +V1 causes the following reaction in the aqueous solution S1 in the first electrode chamber 11. In the vicinity of the first electrode 41, hydroxide ions ($OH^-$) in the water ($H_2O$) cause the reaction of Formula (1) below, generating water ($H_2O$) and oxygen ($O_2$) and emitting electrons $e^-$ to the first electrode 41. However, when the aqueous solution S1 is a neutral or acidic aqueous solution, $H_2O$ causes the reaction of Formula (5) below, instead of the reaction of Formula (1) below, to generate $H^+$ and $O_2$. As $OH^-$ decreases or $H^+$ increases, the reaction of Formula (6) below, where hydrogen ions ($H^+$) of $H_2O$ permeate the ion exchange membrane 31 and migrate to the Li-containing non-aqueous solution FS in the Li supply chamber 12, occurs to maintain the charge balance. In each formula, hydrogen ions ($H^+$) dissolved in the organic solvent are expressed as $H^+$ (non-aq.), and the other ions ($H^+$, $OH^-$) represent those dissolved in water or aqueous solutions.

[Chem. 4]

$$2OH^- \rightarrow H_2O + \frac{1}{2}O_2 \uparrow + 2e^- \quad \cdots (1)$$

$$H_2O \rightarrow \frac{1}{2}O_2 \uparrow + 2H^+ + 2e^- \quad \cdots (5)$$

$$H^+ \rightarrow H^+(\text{non-aq.}) \qquad (6)$$

In the Li-containing non-aqueous solution FS in the Li supply chamber 12, application of a voltage +V1 generates an electric field in a direction from the ion exchange membrane 31 side to the electrolyte membrane 2 side, and the cations $Li^+$ and $M^{n+}$ in the Li-containing non-aqueous solution FS are attracted by electrostatic force to the surface (front surface) of the electrolyte membrane 2 on the Li supply chamber 12 side. As $H^+$ migrates from the aqueous solution S1 in the first electrode chamber 11 (due to the reaction of Formula (6)), the reaction of Formula (7) below, where $Li^+$ in the Li-containing non-aqueous solution FS migrates into the electrolyte membrane 2, occurs near the surface of the electrolyte membrane 2 to maintain the charge balance. In Formula (7), lithium ions ($Li^+$) dissolved in the organic solvent are expressed as $Li^+$ (non-aq.).
[Chem. 5]

$$Li^+(\text{non-aq.}) \rightarrow Li^+(\text{electrolyte}) \qquad (7)$$

On the other hand, in the Li recovery aqueous solution RS in the Li recovery chamber 13, the application of the voltage +V1 causes the following reaction. The electrons $e^-$ are supplied to $H_2O$ in the Li recovery aqueous solution RS to cause the reaction of Formula (4) below near the second electrode 42, thus generating hydrogen ($H_2$) and $OH^-$. In the Li recovery aqueous solution RS, as $OH^-$ increases, the reaction of Formula (3) below, where $Li^+$ in the electrolyte membrane 2 migrates to the Li recovery aqueous solution RS, occurs to maintain the charge balance. In the Li recovery aqueous solution RS, the reactions of Formulas (3) and (4) below are combined to cause the reaction of Formula (8) below.
[Chem. 6]

$$2H_2O + 2e^- \rightarrow 2OH^- + H_2 \uparrow \qquad (4)$$

$$Li^+(\text{electrolyte}) \rightarrow Li^+ \qquad (3)$$

$$2Li^+(\text{electrolyte}) + 2H_2O + 2e^- \rightarrow 2OH^- + H_2 \uparrow +2Li^+ \qquad (8)$$

From the reaction of Formula (7) to the reaction of Formula (3), that is, the infiltration of $Li^+$ in the Li-containing non-aqueous solution FS from the surface of the electrolyte membrane 2 to the inside thereof, the $Li^+$ migration in the electrolyte membrane 2, and the migration of $Li^+$ in the electrolyte membrane 2 into the Li recovery aqueous solution RS proceed as follows. The application of the voltage +V1 causes the reaction of Formula (7) where $Li^+$ in the Li-containing non-aqueous solution FS burrows into lattice defect sites on the surface (front surface) of the electrolyte membrane 2 on the Li supply chamber 12 side. The application of the voltage +V1 causes a potential gradient in the electrolyte membrane 2 where the potential of the surface (rear surface) on the opposite side (recovery chamber 13 side) is low. Therefore, the $Li^+$ that has burrowed into the lattice defect site on the surface jumps (hops) to a lattice defect site near the deep side of the electrolyte membrane 2. Li+ thus keeps migrating from the lattice defect site of the electrolyte membrane 2 to the nearby lattice defect site. Finally, as the reaction of Formula (3), $Li^+$ migrates from the lattice defect site on the rear surface into the Li recovery aqueous solution RS. As the $Li^+$ at the lattice defect site on the front surface of the electrolyte membrane 2 migrates deep into the electrolyte membrane 2, other $Li^+$ adsorbed in the vicinity of an empty lattice defect site or $Li^+$ in the Li-containing non-aqueous solution FS burrows into the empty lattice defect site, and these $Li^+$ similarly migrate in the electrolyte membrane 2.

In the lithium recovery method according to this embodiment, by setting the voltage V1 higher than or equal to the voltage at which water electrolysis occurs, the reaction of Formula (1) or Formula (5) and the reaction of Formula (4) occur, causing $Li^+$ migration in the electrolyte membrane 2. The voltage (electrolysis voltage) at which water electrolysis occurs is +1.229 V (25 °C) when the aqueous solution S1 and the Li recovery aqueous solution RS have the same pH (hydrogen ion concentration). The voltage V1 actually needs to be several hundred mV higher than 1.229 V, which is a theoretical voltage, based on electrode performance and the like to determine the electrode reaction overvoltage of the electrodes 41 and 42. Furthermore, the higher the pH of the Li recovery aqueous solution RS relative to the aqueous solution S1, the higher the electrolysis voltage.

Furthermore, the higher the voltage V1, the larger the reaction amount of each of the reaction of Formula (1) or Formula (5) and the reaction of Formula (4) and thus the faster the reaction of Formula (7) and the reaction of Formula (3). The electric field generated in the Li-containing non-aqueous solution FS in the Li supply chamber 12 also becomes stronger, causing $Li^+$ to be attracted to the vicinity of the surface of the electrolyte membrane 2 and become relatively highly concentrated. The potential gradient between both surfaces of the electrolyte membrane 2 also increases, and the $Li^+$ migration amount per hour ($Li^+$ mobility) increases. However, when the potential difference between both surfaces of the electrolyte membrane 2 is higher than or equal to a potential that causes some of the metal ions constituting the electrolyte membrane 2 to be reduced (for example, when the electrolyte membrane 2 is LLTO, $Ti^{4+}+e^- \rightarrow Ti^{3+}$), the electrolyte membrane 2 conducts electrons $e^-$ from the Li recovery chamber 13 side to the Li supply chamber 12 side. As a result, most of the applied electric energy is consumed in the conduction of electrons $e^-$, thus reducing the voltage dependence of the

$Li^+$ mobility and causing a sharp drop in energy efficiency in the $Li^+$ migration (see Patent Literature 2). This phenomenon easily occurs particularly with transition metal ions among the metal ions constituting the electrolyte membrane 2.

In the lithium recovery device 1 according to this embodiment, at least the first electrode 41 of the first electrode 41 and the second electrode 42 is disposed spaced apart from the electrolyte membrane 2. This minimizes the potential difference between both surfaces of the electrolyte membrane 2 relative to the voltage V1. Therefore, the electrolyte membrane 2 does not easily exhibit electron conductivity (see Patent Literature 2). However, when the voltage V1 is increased to a certain level, the potential difference between both surfaces of the electrolyte membrane 2 reaches a level at which the electrolyte membrane 2 exhibits electron conductivity. Therefore, it is preferable to set the voltage V1 below this level. The relationship between the voltage V1 and the potential difference between both surfaces of the electrolyte membrane 2 depends on the distance between the first electrode 41 and the ion exchange membrane 31, the distance between the second electrode 42 and the electrolyte membrane 2, the distance between the ion exchange membrane 31 and the electrolyte membrane 2 (the length of the Li supply chamber 12), and the electron conductivity of each of the aqueous solution S1 and the Li recovery aqueous solution RS. Particularly, when the $Li^+$ concentration (LiOH concentration) of the Li recovery aqueous solution RS increases as $Li^+$ recovery progresses, the electron conductivity of the Li recovery aqueous solution RS also increases, and the potential difference between both sides of the electrolyte membrane 2 increases so as to approach the voltage V1. Therefore, it is preferable to set the voltage V1 taking into consideration the electron conductivity of the Li recovery aqueous solution RS during operation.

In the Li recovery using electrodialysis, the $Li^+$ mobility is rate-limited by $Li^+$ diffusion to the electrolyte membrane surface on the supply side. Therefore, when the $Li^+$ concentration of the aqueous solution on the supply side is low, the $Li^+$ mobility does not easily increase even if the applied voltage (V1) between both surfaces of the electrolyte membrane is increased. In this embodiment, as described above, the electric field generated in the Li-containing non-aqueous solution FS in the Li supply chamber 12 makes the $Li^+$ concentration in the Li-containing non-aqueous solution FS relatively high near the surface of the electrolyte membrane 2, thereby improving energy efficiency.

The $Li^+$ migration in the electrolyte membrane 2 becomes faster as the temperature becomes higher, besides the voltage V1. Therefore, it is preferable that the temperature of the electrolyte membrane 2 is high. The resistances of the aqueous solutions S1 and the Li recovery aqueous solution RS are lower as the temperature is higher. The applicable temperature range of the electrolyte membrane 2 is higher than or equal to the freezing point and below the boiling point of the solutions S1, FS, and RS, preferably higher than or equal to 20 °C.

In the lithium recovery method according to the present invention, as the operating time passes, the reaction of Formula (1) or Formula (5) reduces the aqueous solution S1 in the first electrode chamber 11, and the reaction of Formula (4) reduces the Li recovery aqueous solution RS in the Li recovery chamber 13. The Li-containing non-aqueous solution FS in the Li supply chamber 12 may also decrease due to volatilization of the organic solvent. Therefore, it is preferable that the water supply device 81 and the circulation devices 82 and 83 operate to maintain the liquid levels in the chambers 11, 12, and 13, for example, by detecting the liquid level with a liquid level sensor or by setting a timer. In the lithium recovery device 1, it is preferable that the liquid levels in the chambers 11, 12, and 13 are the same during operation. Furthermore, as the operating time passes, the $Li^+$ concentration in the Li recovery aqueous solution RS increases and the pH rises. Therefore, the pH of the aqueous solution S1 may be increased accordingly to suppress an increase in the electrolysis voltage. To this end, for example, an alkali solution such as sodium hydroxide (NaOH) is supplied to the first electrode chamber 11 during operation.

For the Li recovery aqueous solution RS in the Li recovery chamber 13 and in the circulation tank of the circulation device 83 after the operation is completed, Li can be recovered, for example, by evaporating water as necessary to concentrate Li, and then generating and precipitating lithium carbonate ($Li_2CO_3$) by carbon dioxide gas ($CO_2$) bubbling or the like. Alternatively, Li can also be recovered by cooling the Li recovery aqueous solution RS or evaporating water, leading to a supersaturated state, to generate and precipitate lithium hydroxide (LiOH). During operation, $Li^+$ may be precipitated as lithium carbonate or the like in the precipitation tank of the circulation device 83. This configuration makes it possible to prevent the pH of the Li recovery aqueous solution RS from increasing during operation of the lithium recovery device 1.

Similarly, after operation is completed, the metal ions $M^{n+}$ other than $Li^+$ and the organic solvent can be recovered by known methods appropriate for each of them from the Li-containing non-aqueous solution FS in the Li supply chamber 12 and the circulation tank of the circulation device 82.

In this embodiment, the aqueous solution S1 stored in the first electrode chamber 11 can be an aqueous solution other than pure water, as described above. When the aqueous solution S1 is a neutral or alkaline aqueous solution containing cations (metal ions) other than $H^+$, metal ions can be supplied from the aqueous solution S1 to the Li-containing non-aqueous solution FS together with $H^+$. However, depending on the type of metal ions, the metal ions may precipitate rather than dissolve as they migrate from the aqueous solution S1 to the Li-containing non-aqueous solution FS, causing blockage or the like of the surface of the ion exchange membrane 31 on the Li supply chamber 12 side, resulting in efficiency degradation. When metal ions are supplied from the aqueous solution S1 to the Li-containing non-aqueous solution FS, the efficiency of recovering the organic solvent from the Li-containing non-aqueous solution FS after operation is completed may be reduced. Therefore, as described above, the lithium recovery device 1 preferably uses a proton-conducting membrane or bipolar membrane that does not permeate metal ions contained in the aqueous solution S1, that is, permeates only $H^+$ from the aqueous solution S1, as the ion exchange membrane 31.

Alternatively, in a case of moving metal ions along with $H^+$ from the aqueous solution S1 to the Li-containing non-aqueous solution FS, the metal ions contained in the aqueous solution S1 are other than $Li^+$ and permeate the ion exchange membrane 31. Those metal ions are preferably dissolved in an ionic state in the Li-containing non-aqueous solution FS. Examples of such metal ions include $Na^+$ with $PF_6^-$ or $BF_4^-$ as counterions, as with $Li^+$. The aqueous solution S1 can be a sodium hydroxide (NaOH) aqueous solution or a sodium chloride (NaCl) aqueous solution. However, when the aqueous solution S1 contains $Cl^-$, platinum chloride ($PtCl_2$) is formed on the surface of the first electrode 41 made of Pt as the operating time passes, which impairs the high catalytic activity inherent to Pt, and increases the electrode reaction overvoltage. Therefore, if the aqueous solution S1 contains $Cl^-$, its concentration is preferably low. When the aqueous solution S1 is an NaOH aqueous solution or an NaCl aqueous solution, application of the voltage +V1 causes Na+ to permeate the ion exchange membrane 31 and migrate to the Li-containing non-aqueous solution FS, similar to the migration of $H^+$ in $H_2O$ from the aqueous solution S1 to the Li-containing non-aqueous solution FS (the reaction of Formula (6)). When metal ions (for example, $Na^+$) migrate along with $H^+$ from the aqueous solution S1 to the Li-containing non-aqueous solution FS, the pH of the aqueous solution S1 decreases as the operating time passes due to a decrease in water caused by the reaction of Formula (1) or Formula (5) as well as a decrease in metal ions. Therefore, NaOH or the like may be supplied as necessary to the first electrode chamber 11 during operation, in addition to the supply of pure water from the water supply device 81, to maintain or increase the pH of the aqueous solution S1.

In this embodiment, a Li recovery medium stored in the Li recovery chamber 13 is not limited to water or an aqueous solution, and can be a non-aqueous solution. A Li recovery non-aqueous solution RSA may be a non-aqueous solution in which Li is dissolved in the form of lithium ions ($Li^+$). The Li recovery non-aqueous solution RSA is a non-aqueous solution prepared by dissolving anions $A^{n-}$ such as $PF_6^-$, which act as counterions for $Li^+$, in an organic solvent such as EC used in the Li-containing non-aqueous solution FS. It is preferable that the Li recovery non-aqueous solution RSA does not contain metal ions other than $Li^+$, similar to the Li recovery aqueous solution RS. The Li recovery non-aqueous solution RSA may be a Li salt non-aqueous solution such as $LiPF_6$ or a non-aqueous solution of hexafluorophosphoric acid ($HPF_6$) or tetrafluoroboric acid ($HBF_4$). The second electrode 42 is formed of an electrode material that is stable in the Li recovery non-aqueous solution RSA even when a voltage is applied. When the Li recovery non-aqueous solution RSA is stored in the Li recovery chamber 13, the application of the voltage +V1 causes the reaction of Formula (9) below, which causes $Li^+$ in the electrolyte membrane 2 to migrate, in the Li recovery non-aqueous solution RSA, similar to the Li recovery aqueous solution RS. When $HPF_6$, $HBF_4$ or the like as a salt of $H^+$ is sufficiently dissolved in the Li recovery non-aqueous solution RSA, the reaction of Formula (4) below occurs near the second electrode 42 to generate $H_2$. In the Li recovery non-aqueous solution RSA, the anions $A^{n-}$ maintain charge neutrality as counterions near $Li^+$, causing no changes.

[Chem. 7]

$$Li^+(electrolyte) \rightarrow Li^+(non\text{-}aq.) \qquad (9)$$

$$2H_2O + 2e^- \rightarrow 2OH^- + H_2 \uparrow \qquad (4)$$

(First Modification)

As described above, when the Li recovery non-aqueous solution RSA is stored in the Li recovery chamber 13, metal lithium can be recovered, rather than in the form of $Li^+$, in the Li recovery chamber 13. As shown in FIG. 3, a lithium recovery device 1A according to a modification of the first embodiment of the present invention includes a second electrode 42A provided spaced apart from an electrolyte membrane 2, and has a Li recovery non-aqueous solution RSA stored in a Li recovery chamber 13. The lithium recovery device 1A according to this modification may include a water supply device 81 and circulation devices 82 and 83 (not shown), similar to the lithium recovery device 1 according to the above embodiment shown in FIG. 1.

In this modification, the potential of the second electrode 42A is set to be lower than or equal to the reduction potential of $Li^+$ (-3.05 V vs. SHE), and a voltage +V1 is applied. Then, in the Li recovery non-aqueous solution RSA, in addition to the reaction of Formula (9) below, the reaction of Formula (10) below, where $Li^+$ is reduced by the supply of electrons $e^-$, occurs near the second electrode 42A. As a result, metal Li is precipitated on the surface of the second electrode 42A, facilitating the recovery of Li after operation is completed. In this modification, an organic solvent for the Li recovery non-aqueous solution RSA is preferably one whose lowest unoccupied molecular orbital (LUMO) potential is lower than the potential of the second electrode 42A, that is, somewhat lower than the reduction potential of $Li^+$, so as to prevent reductive decomposition by the application of the voltage +V1. Specific examples of such organic solvent include EC, PC, DMC, NMP, and the like.
[Chem. 8]

$$Li^+(\text{electrolyte}) \rightarrow Li^+(\text{non-aq.}) \cdots \qquad (9)$$

$$Li^+(\text{non-aq.}) + e^- \rightarrow Li \qquad (10)$$

The second electrode 42A is formed of an electrode material that has electron conductivity and is stable in the Li recovery non-aqueous solution RSA even when a voltage is applied. It is preferable that the material constituting the second electrode 42A also has catalytic activity for the reaction of Formula (10) and facilitates the recovery of metal Li precipitated on the surface. Alternatively, the second electrode 42A may be formed of high-purity metal Li, which particularly facilitates the Li recovery after operation is completed. The second electrode 42A preferably has a net-like shape, similar to the first electrode 41, so that the Li recovery non-aqueous solution RSA in contact with the rear surface of the electrolyte membrane 2 is continuously circulated in the Li recovery chamber 13. The second electrode 42A is provided spaced apart from the electrolyte membrane 2 in the Li recovery chamber 13, and is preferably disposed parallel to the electrolyte membrane 2.

Here, the $Li^+$ reduction potential is lower than the reduction potential of the metal ions constituting the electrolyte membrane 2 (when the electrolyte membrane 2 is LLTO, $Ti^{4+}+e^- \rightarrow Ti^{3+}$). Therefore, when the second electrode 42 is provided in contact with the electrolyte membrane 2 as shown in FIG. 2, the surface of the electrolyte membrane 2 on the Li recovery chamber 13 side has the same potential as the second electrode 42, resulting in a forced reduction potential lower than the reduction potential of the metal ions. This causes a reduction reaction such as $Ti^{4+}+e^- \rightarrow Ti^{3+}$. As a result, Joule heat loss due to electron conduction increases in the electrolyte membrane 2, significantly reducing energy efficiency. As the operating time passes, the metal Li precipitated on the surface of the second electrode 42 blocks pores in the second electrode 42 and the surface of the electrolyte membrane 2 on the Li recovery chamber 13 side, reducing Li+ mobility. To prevent this, after a certain period of operating time passes, the metal Li needs to be removed from the surface of the second electrode 42, which is undesirable from the viewpoint of productivity. Therefore, it is preferable that the second electrode 42A is disposed at a distance from the electrolyte membrane 2 so that the surface of the electrolyte membrane 2 on the Li recovery chamber 13 side has a higher reduction potential than that of the metal ions constituting the electrolyte membrane 2 when the voltage +V1 is applied.

To recover metal Li in the Li recovery chamber 13, an organic solvent that does not contain anions $A^{n-}$ can be stored in the Li recovery chamber 13. In this case, since the organic solvent does not have electron conductivity, a second electrode 42 is provided in contact with the electrolyte membrane 2, as in the first embodiment. $Li^+$ in the electrolyte membrane 2 is reduced (the reaction of Formula (10)) as soon as it migrates to the organic solvent in the Li recovery chamber 13 (the reaction of Formula (9)). This, however, leads to poor energy efficiency and poor productivity as described above. The organic solvent in the Li recovery chamber 13 is stored to prevent oxidation and combustion of the precipitated metal Li, and may be a medium having low reactivity (no reactivity) to Li. For example, argon (Ar) gas may be stored in the Li recovery chamber 13.

(Second Modification)

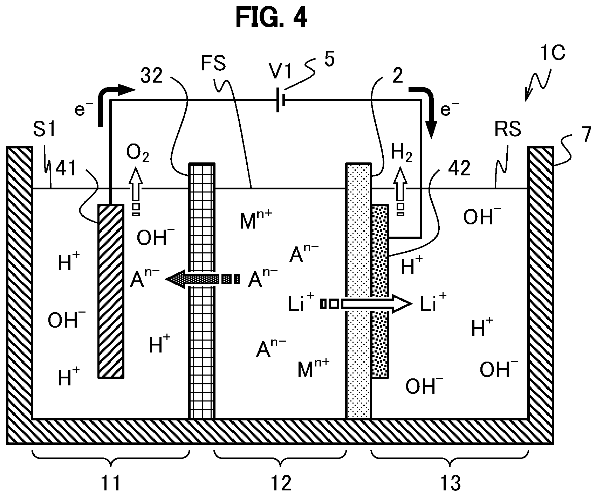

When the anions $A^{n-}$ contained in the Li-containing non-aqueous solution FS include water-soluble anions such as $BF_4^-$ and TFSA$^-$, the aqueous solution (water) S1 stored in the first electrode chamber 11 can also serve as a recipient of the anions from the Li-containing non-aqueous solution FS. To this end, as shown in FIG. 4, a lithium recovery device 1C according to a modification of the first embodiment of the present invention includes an anion exchange membrane (first ion-conducting membrane) 32 that conducts the anions $A^{n-}$, instead of the ion exchange membrane 31 of the lithium recovery device 1 according to the above embodiment. The lithium recovery device 1C may also include a water supply device 81 and circulation devices 82 and 83 (not shown), similar to the lithium recovery device 1 according to the above embodiment shown in FIG. 1.

The anion exchange membrane 32 conducts at least one type of water-soluble anions $A^{n-}$ contained in the Li-containing non-aqueous solution FS. By partitioning the first electrode chamber 11 and the Li supply chamber 12 with the anion exchange membrane 32, the anions $A^{n-}$ in the Li-containing non-aqueous solution FS in the Li supply chamber 12 can migrate into the aqueous solution S1 in the first electrode chamber 11. The anion exchange membrane 32 is resistant to the organic solvent contained in the Li-containing non-aqueous solution FS. The anion exchange membrane 32 can be a known anion exchange membrane, such as SELEMION (registered trademark) AMV (manufactured by AGC Engineering Co., Ltd.) and NEOSEPTA ASE (manufactured by Astom Co., Ltd.). The arrangement of the anion exchange membrane 32 in the lithium recovery device 1C and other configurations are the same as those of the ion exchange membrane 31 in the above embodiment.

The aqueous solution S1 stored in the first electrode chamber 11 can be pure water or an acidic, neutral or alkaline aqueous solution, as in the above embodiment. It is preferable, however, that the aqueous solution S1 does not contain metal ions and the like that are contained in the Li-containing non-aqueous solution FS and react with anions $A^{n-}$ that permeate the anion exchange membrane 32 to generate precipitates.

In a lithium recovery method using the lithium recovery device 1C, as in the method using the lithium recovery device 1 according to the above embodiment, the power supply 5 applies a positive voltage V1 (+V1), with respect to the second electrode 42, to the first electrode 41. This application of the voltage +V1 causes the reaction of Formula (1) below or Formula (5) below near the first electrode 41, as in the above embodiment, thus generating $O_2$ in the aqueous solution S1 in the first electrode chamber 11. In the lithium recovery device 1C, the reaction of Formula (11) below, where the anions $A^{n-}$ in the Li-containing non-aqueous solution FS in the Li supply chamber 12 permeate the anion exchange membrane 32 and migrate into the aqueous solution S1, occurs to maintain the charge balance, as $OH^-$ decreases or $H^+$ increases in the aqueous solution S1. In Formula (11), the anions $A^{n-}$ dissolved in the organic solvent are expressed as $A^{n-}$ (non-aq.).
[Chem. 9]

$$2OH^- \rightarrow H_2O + \frac{1}{2}O_2 \uparrow + 2e^- \cdots (1)$$

$$H_2O \rightarrow \frac{1}{2}O_2 \uparrow + 2H^+ + 2e^- \cdots (5)$$

$$A^{n-}(\text{non-aq.}) \rightarrow A^{n-} \cdots \qquad (11)$$

In the Li-containing non-aqueous solution FS in the Li supply chamber 12, as in the above embodiment, $Li^+$ and $M^{n+}$ in the Li-containing non-aqueous solution FS are attracted by electrostatic force to the surface of the electrolyte membrane 2. As the anions $A^{n-}$ decrease through migration to the aqueous solution S1 in the first electrode chamber 11 (due to the reaction of Formula (11)), the reaction of Formula (7) below, where $Li^+$ in the Li-containing non-aqueous solution FS migrates into the electrolyte membrane 2, occurs near the surface of the electrolyte membrane 2 to maintain the charge balance.
[Chem. 10]

$$Li^+(\text{non-aq. }) \rightarrow Li^+(\text{electrolyte}) \qquad (7)$$

On the other hand, in the Li recovery aqueous solution RS in the Li recovery chamber 13, as in the above embodiment, the reaction of Formula (4) below occurs near the second electrode 42, thus generating $H_2$ and $OH^-$, and the reaction of Formula (3) below, where $Li^+$ in the electrolyte membrane 2 migrates to the Li recovery aqueous solution RS, occurs to maintain the charge balance. Accordingly, the lithium recovery device 1C can recover Li in the same way as the lithium recovery device 1 according to the above embodiment.
[Chem. 11]

$$2H_2O + 2e^- \rightarrow 2OH^- + H_2 \uparrow \qquad (4)$$

$$Li^+(\text{electrolyte}) \rightarrow Li^+ \qquad (3)$$

In this modification, as the operating time passes, water in the aqueous solution S1 is reduced by the reaction of Formula (1) or Formula (5) and the pH of the aqueous solution S1 is lowered by the anions $A^{n-}$ migrating from the Li-containing non-aqueous solution FS. Therefore, the pH of the aqueous solution S1 may be adjusted as necessary during operation.

In the lithium recovery device 1C, as in the lithium recovery device 1 according to the above embodiment, a Li recovery non-aqueous solution RSA can be stored in the Li recovery chamber 13. As in the lithium recovery device 1A according to the above modification (see FIG. 3), a second electrode 42A can also be provided to recover metal lithium.

According to the lithium recovery devices according to the first embodiment and the modifications thereof, the first electrode chamber is provided by partitioning with the ion-conducting membrane on the Li supply side of the Li supply chamber in the processing tank, and water is stored in the first electrode chamber. By generating $O_2$ from the water, Li can be recovered from the non-aqueous solution through electrodialysis.

[Second Embodiment]

In the lithium recovery device according to the first embodiment, it is preferable to suppress the voltage applied between both surfaces of the lithium ion-conducting electrolyte membrane so as to achieve a potential difference that prevents the lithium ion-conducting electrolyte membrane from exhibiting electron conductivity. Therefore, the following configuration is adopted to prevent the lithium ion-conducting electrolyte membrane from exhibiting the electron conductivity while increasing the Li$^+$ mobility by increasing the voltage. A lithium recovery device and a lithium recovery method according to a second embodiment of the present invention will be described below.

[Lithium Recovery Device]

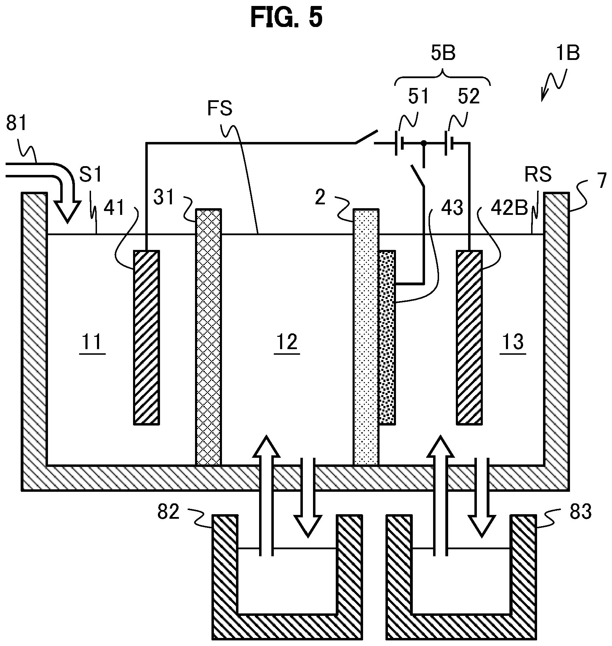

As shown in FIG. 5, a lithium recovery device 1B according to a second embodiment of the present invention includes: an electrolyte membrane (lithium ion-conducting electrolyte membrane) 2; an ion exchange membrane (first ion-conducting membrane) 31; a processing tank 7 partitioned by the ion exchange membrane 31 and the electrolyte membrane 2 into three chambers 11, 12, and 13 in this order; a first electrode 41 provided in a first electrode chamber (third chamber) 11 at one end of the processing tank 7; a third electrode 43 provided in contact with the electrolyte membrane 2 in a Li recovery chamber (first chamber) 13 at the other end of the processing tank 7; a second electrode 42B provided spaced apart from the third electrode 43; and a power supply 5B connected between the electrodes 41 and 42B with the first electrode 41 as a positive electrode. The power supply 5B includes a first power supply 51 and a second power supply 52 connected in series to a negative electrode of the first power supply. The third electrode is connected to the negative electrode of the first power supply 51. The first electrode chamber (third chamber) 11 stores an aqueous solution S1. The Li supply chamber (second chamber) 12 stores a Li-containing non-aqueous solution FS. The Li recovery chamber (first chamber) 13 stores a Li recovery aqueous solution RS. The lithium recovery device 1B may further include a water supply device 81 and circulation devices 82 and 83 as necessary. As with the lithium recovery device 1 according to the first embodiment, the lithium recovery device 1B may further include a heating device, a cooling device, a liquid level sensor, a pH meter, an exhaust unit, and the like. The lithium recovery device 1B according to this embodiment is configured as follows, compared to the lithium recovery device 1 according to the first embodiment shown in FIG. 1. Specifically, the power supply 5B is composed of two power supplies 51 and 52 connected in series. The second electrode 42B is provided spaced apart from the electrolyte membrane 2 in the Li recovery chamber 13. The third electrode 43 is added in the Li recovery chamber 13, which is connected to the negative electrode of the first power supply 51 (positive electrode of the second power supply 52) and is in contact with the electrolyte membrane 2.

The second electrode 42B is an electrode paired up with the first electrode 41 to apply a voltage, and is an electrode for forming a potential lower than that of the rear surface of the electrolyte membrane 2 in the Li recovery aqueous solution RS. Therefore, the second electrode 42B is disposed in the Li recovery chamber 13 so as not to contact the electrolyte membrane 2 and the third electrode 43 provided in contact with the electrolyte membrane 2, and so as to face the third electrode 43. The second electrode 42B is preferably disposed parallel to the third electrode 43. The second electrode 42B is preferably disposed close to the third electrode 43 to the extent that it does not short-circuit, as will be described later. It is also preferable that the second electrode 42B has a shape such as a mesh so as to increase the contact area with the Li recovery aqueous solution RS. The second electrode 42B is formed of an electrode material that has electron conductivity and is stable even when a voltage is applied in the Li recovery aqueous solution RS. This material preferably has catalytic activity for the reaction of Formula (4) below. Specifically, the second electrode 42B can be made of the same electrode material as that of the second electrode 42 of the first embodiment.
[Chem. 12]

$$2H_2O + 2e^- \rightarrow 2OH^- + H_2 \uparrow \qquad (4)$$

The third electrode 43 is an electrode paired up with the first electrode 41 to apply a voltage between both surfaces of the ion exchange membrane 31 and between both surfaces of the electrolyte membrane 2. The third electrode 43 is also an electrode for forming a relatively high potential on the surface of the electrolyte membrane 2 on the Li recovery chamber 13 side in the Li recovery aqueous solution RS. To this end, the third electrode 43 is provided in contact with or spaced apart from the surface of the electrolyte membrane 2 on the Li recovery chamber 13 side. The third electrode 43 is preferably provided closer to the electrolyte membrane 2. It is more preferable that the third electrode 43 has a porous structure and is provided in contact with the electrolyte membrane 2, similar to the second electrode 42 of the lithium recovery device 1 according to the first embodiment (see FIG. 1). The third electrode 43 is formed of an electrode material that has electron conductivity and is stable even when a voltage is applied in the Li recovery aqueous solution RS. This material preferably has catalytic activity for the reaction of Formula (1) below and the reaction of Formula (3) below. Such an electrode material is preferably platinum (Pt), for example.
[Chem. 13]

$$2\mathrm{OH}^- \rightarrow \mathrm{H_2O} + \frac{1}{2}\mathrm{O_2} \uparrow +2e^- \quad \cdots \quad (1)$$

$$\mathrm{Li^+} \rightarrow \mathrm{Li^+(electrolyte)} \qquad (3)$$

The power supply 5B is composed of the first and second power supplies 51 and 52 connected in series. The power supplies 51 and 52 are each the same DC power supply as the power supply 5 of the first embodiment. The first power supply 51 has a positive electrode connected to the first electrode 41 and a negative electrode connected to the third electrode 43, and applies a voltage V1. The first power supply 51 applies a voltage between both surfaces of the electrolyte membrane 2. The second power supply 52 is connected in series to the negative electrode of the first power supply 51. Therefore, the second power supply 52 has a positive electrode connected to the third electrode 43 and a negative electrode connected to the second electrode 42B. The second power supply 52 applies a voltage V2 and forms a potential lower than that of the rear surface of the electrolyte membrane 2 in the Li recovery aqueous solution RS, thereby preventing the electrolyte membrane 2 from developing the electron conductivity.

(Lithium Recovery Method)

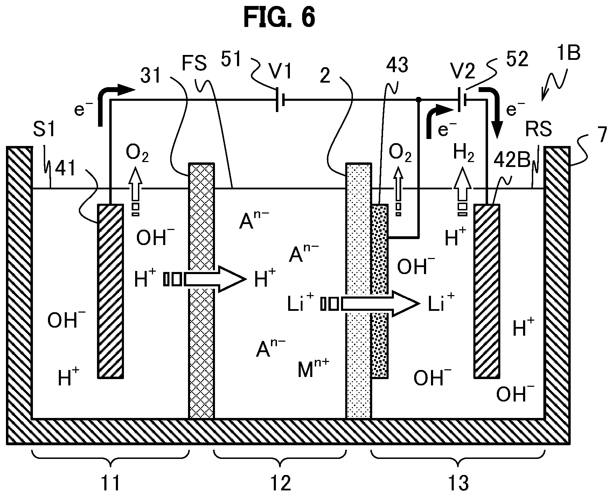

A lithium recovery method according to the second embodiment of the present invention will be described with reference to FIG. 6. The lithium recovery method according to this embodiment is performed as follows using the lithium recovery device 1B. FIG. 6 omits the water supply device 81 and the circulation devices 82 and 83.

In this embodiment, the application of the voltage V1 by the first power supply 51 and the application of the voltage V2 by the second power supply 52 are performed simultaneously. In the lithium recovery device 1B, the first power supply 51 and the second power supply 52, which are connected in series, can be considered as one power supply 5B (see FIG. 5). The power supply 5B applies a positive voltage (V1+V2), with respect to the second electrode 42B, to the first electrode 41. Then, the same reactions as those in the first embodiment (see FIG. 2) occur in the aqueous solution S1 in the first electrode chamber 11 and in the Li-containing non-aqueous solution FS in the Li supply chamber 12. Specifically, in the aqueous solution S1, the reaction of Formula (1) below or Formula (5) below occurs near the first electrode 41 to generate $\mathrm{O_2}$. This causes the reaction of Formula (6) below, where $\mathrm{H^+}$ of $\mathrm{H_2O}$ in the aqueous solution S1 permeates the ion exchange membrane 31 and migrates to the Li-containing non-aqueous solution FS in the Li supply chamber 12. Then, in the Li-containing non-aqueous solution FS, the reaction of Formula (7) below, where $\mathrm{Li^+}$ migrates into the electrolyte membrane 2, occurs near the surface of the electrolyte membrane 2.

[Chem. 14]

$$2\mathrm{OH}^- \rightarrow \mathrm{H_2O} + \frac{1}{2}\mathrm{O_2} \uparrow +2e^- \quad \cdots \quad (1)$$

$$\mathrm{H_2O} \rightarrow \frac{1}{2}\mathrm{O_2} \uparrow +2\mathrm{H^+} + 2e^- \qquad \cdots \quad (5)$$

$$\mathrm{H^+} \rightarrow \mathrm{H^+(non\text{-}aq.)} \cdots \qquad (6)$$

$$\mathrm{Li^+(non\text{-}aq.)} \rightarrow \mathrm{Li^+(electrolyte)} \cdots \qquad \textbf{(7)}$$

Meanwhile, the following reaction occurs in the Li recovery aqueous solution RS in the recovery chamber 13 in which the second electrode 42B and the third electrode 43 are disposed. In the vicinity of the second electrode 42B, the voltage (V1+V2) application by the power supply 5B supplies electrons e⁻ to $\mathrm{H_2O}$ in the Li recovery aqueous solution RS, causing the reaction of Formula (4) below to generate $\mathrm{H_2}$ and $\mathrm{OH^-}$. At the same time, the second power supply 52 applies a positive voltage V2 of a predetermined level based on the voltage V1, with respect to the second electrode 42B, to the third electrode 43. Then, in the vicinity of the third electrode 43, $\mathrm{OH^-}$ in the Li recovery aqueous solution RS causes the reaction of Formula (1) below, emitting electrons e⁻ to the third electrode 43 to generate $\mathrm{H_2O}$ and $\mathrm{O_2}$. Due to the difference in applied voltage, this reaction is slower than the reaction of Formula (4) below near the second electrode 42B. Therefore, in the Li recovery aqueous solution RS, the reaction of Formula (4) below and the reaction of Formula (1) below are combined to increase $\mathrm{OH^-}$. This causes the reaction of Formula (3) below, which causes $\mathrm{Li^+}$ in the electrolyte membrane 2 to migrate, to occur on the rear surface of the electrolyte membrane 2, that is, near the third electrode 43 to maintain the charge balance.

In the Li recovery aqueous solution RS, a decrease in H+ due to the reaction of Formula (4) below near the second electrode 42B and excess cations due to the reaction of Formula (1) below and the reaction of Formula (3) below near the third electrode 43 cause charge imbalance. To resolve this, Li$^+$ quickly migrates from the vicinity of the third electrode 43 to the vicinity of the second electrode 42B. The relative relationship in level between the voltage V1 and the voltage V2 will be described later.

[Chem. 15]

$$2H_2O + 2e^- \rightarrow 2OH^- + H_2 \uparrow \qquad (4)$$

$$2OH^- \rightarrow H_2O + \frac{1}{2}O_2 \uparrow + 2e^- \quad \cdots \quad (1)$$

$$Li^+(electrolyte) \rightarrow Li^+ \qquad (3)$$

In this embodiment, the application of the voltage V2 causes a potential gradient in the Li recovery aqueous solution RS, where the vicinity of the third electrode 43 (electrolyte membrane 2) is positive and the vicinity of the second electrode 42B is negative. Then, the electrons e$^-$ supplied from the second electrode 42B to the Li recovery aqueous solution RS migrate from the third electrode 43 on the rear surface of the electrolyte membrane 2 to the positive electrode of the second power supply 52. The potential of the third electrode 43, that is, the rear surface of the electrolyte membrane 2, is thus maintained as high as the O$_2$ generation potential. Since the O$_2$ generation potential is higher than the reduction potential of the metal ions constituting the electrolyte membrane 2 (when the electrolyte membrane 2 is LLTO, Ti$^{4+}$+e$^- \rightarrow$ Ti$^{3+}$), the electrolyte membrane 2 does not conduct the electrons e$^-$ regardless of the potential difference between both surfaces thereof. Therefore, the potential difference between both surfaces of the electrolyte membrane 2 can be set to a voltage equal to or larger than the applied voltage that causes the electrolyte membrane 2 to reach the reduction potential of at least one type of metal ions constituting the electrolyte membrane 2. In other words, when the voltage V1 that forms such a large potential difference is applied without applying the voltage V2, the electrons e$^-$ are taken in from the surface (rear surface) of the electrolyte membrane 2 on the negative electrode side (Li recovery chamber 13 side), thereby reducing the metal ions in the electrolyte membrane 2. However, in this embodiment, as described above, the application of the voltage V2 prevents the electrolyte membrane 2 from reaching the reduction potential of the metal ions, and the electrolyte membrane 2 does not conduct the electrons e$^-$. In the Li recovery aqueous solution RS, the potential gradient causes Li$^+$ to be attracted to the vicinity of the second electrode 42B, thus reducing the Li$^+$ concentration near the rear surface of the electrolyte membrane 2. This causes a large chemical potential difference, due to the Li$^+$ concentration gradient, between both surfaces of the electrolyte membrane 2, thus facilitating the Li$^+$ migration between the lattice defect sites in the electrolyte membrane 2.

As described in the first embodiment, the larger the potential gradient in the electrolyte membrane 2, that is, the larger the voltage V1 of the first power supply 51, the faster the Li$^+$ migration in the electrolyte membrane 2. As described above, the larger the Li$^+$ concentration gradient in the electrolyte membrane 2, the faster the Li$^+$ migration in the electrolyte membrane 2. Therefore, the stronger the electric field between the third electrode 43 and the second electrode 42B in the Li recovery aqueous solution RS, that is, the larger the voltage V2 of the second power supply 52, the more easily the reaction of Formula (3) occurs, allowing Li$^+$ in the electrolyte membrane 2 to quickly migrate to the Li recovery aqueous solution RS. Furthermore, the larger the voltage V1, the larger the difference in reaction rate between the reaction of Formula (4) and the reaction of Formula (1), increasing the rate of increase in OH$^-$ in the Li recovery aqueous solution RS. This increases the rate of the reaction of Formula (3), allowing Li$^+$ in the electrolyte membrane 2 to migrate into the Li recovery aqueous solution RS.

When the voltage V2 is not large enough relative to the required voltage determined by the voltage V1, a current flows from the third electrode 43 to the negative electrode of the first power supply 51. In other words, the third electrode 43 receives the electrons e$^-$ to cause the reaction of Formula (4) nearby, thus generating H$_2$. As a result, the electrolyte membrane 2 can exhibit electron conductivity. Therefore, the voltage V2 is set to a level that prevents currents from flowing from the third electrode 43 toward the negative electrode of the first power supply 51. In theory, the voltage is set so that V2 $\geq$ V1 $\times$ [(R2+Rc)/(R1+Ra)] holds true (see Patent Literature 3), where R1 represents the resistance between the first electrode 41 and the third electrode 43, R2 represents the resistance between the third electrode 43 and the second electrode 42B, Ra represents the reaction resistance due to the reaction of Formula (1) or Formula (5) in the first electrode 41, and Rc represents the reaction resistance due to the reaction of Formula (4) in the second electrode 42B. However, as the voltage V2 increases, the current flowing from the second power supply 52 to the third electrode 43 increases, and the

$O_2$ generation (the reaction of Formula (1)) near the third electrode 43 and the $H_2$ generation (the reaction of Formula (4)) near the second electrode 42B increase more than the increase in the $Li^+$ migration amount, resulting in a decrease in energy efficiency. To prevent this, the voltages V1 and V2 may be applied while measuring a current by connecting an ammeter in series to the third electrode 43 (connecting the ammeter between the third electrode 43 and the connection between the first power supply 51 and the second power supply 52), for example.

In the lithium recovery device according to this embodiment, as in the first embodiment, a Li recovery non-aqueous solution RSA (see FIG. 3) can also be stored in the Li recovery chamber 13. In this case, the electrodes 42B and 43 are formed of an electrode material that is stable even when a voltage is applied in the Li recovery non-aqueous solution RSA. The application of the voltages +V1 and +V2 causes the reaction of Formula (9) below near the third electrode 43 in the Li recovery non-aqueous solution RSA. However, when the amount of $HPF_6$ or $HBF_4$ dissolved as a salt of $H^+$ is small, the reaction of Formula (1) and the reaction of Formula (4) for generating $O_2$ and $H_2$ do not occur. Since $O_2$ is not generated near the third electrode 43, no current flows between the third electrode 43 and the positive electrode of the second power supply 52. As described in the first embodiment, the anions $A^{n-}$ maintain charge neutrality as counterions near $Li^+$, causing no changes, in the Li recovery non-aqueous solution RSA.

[Chem. 16]

$$Li^+(electrolyte) \rightarrow Li^+(non\text{-}aq.) \qquad (9)$$

(Modification)

The lithium recovery device according to this embodiment may include an anion exchange membrane 32 (see FIG. 4) as the first ion-conducting membrane, as in the modification of the first embodiment. In the lithium recovery device according to this embodiment, a Li recovery non-aqueous solution RSA may be stored in the Li recovery chamber 13, and metal lithium may also be recovered in the Li recovery chamber 13. To this end, the lithium recovery device 1B includes the second electrode 42A (see FIG. 3) instead of the second electrode 42B. When the voltages +V1 and +V2 are applied, the potential of the second electrode 42A is set lower than or equal to the $Li^+$ reduction potential. As described in the modification of the first embodiment, the voltage V2 is adjusted so that the potential of the surface of the electrolyte membrane 2 on the Li recovery chamber 13 side is higher than the reduction potential of the metal ions constituting the electrolyte membrane 2, that is, so that the potential of the third electrode 43 is higher than the reduction potential of the metal ions.

The lithium recovery device according to the second embodiment and the modification thereof can recover Li from a non-aqueous solution, as in the first embodiment, and can also increase the amount of Li recovered per hour by increasing the applied voltage.

[Third Embodiment]

In the lithium recovery device according to the first embodiment, the processing tank is partitioned by the ion exchange membrane into the Li supply chamber facing the electrolyte membrane and the first electrode chamber at the end. The first electrode is disposed in the first electrode chamber, and ions other than $Li^+$ permeate the ion exchange membrane and migrate, thus allowing $Li^+$ to permeate the electrolyte membrane. Similarly, the Li recovery chamber can also be partitioned by the ion exchange membrane, and the second electrode can be disposed in the chamber at the end. A lithium recovery method according to a third embodiment of the present invention will be described below.

[Lithium Recovery Device]

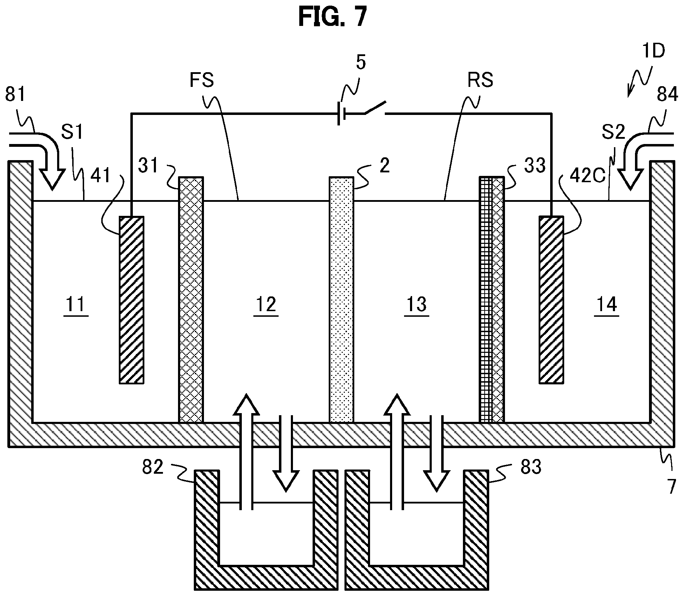

As shown in FIG. 7, a lithium recovery device 1D according to the third embodiment of the present invention includes: an electrolyte membrane (lithium ion-conducting electrolyte membrane) 2; an ion exchange membrane (first ion-conducting membrane) 31; a bipolar membrane (second ion-conducting membrane) 33; a processing tank 7 partitioned by the membranes 31, 2, and 33 into four chambers 11, 12, 13, and 14 in this order; a first electrode 41 provided in a first electrode chamber (third chamber) 11 at one end of the processing tank 7; a second electrode 42C provided in the chamber (fourth chamber) 14 at the other end of the processing tank 7; and a power supply 5 connected between the electrodes 41 and 42C with the first electrode 41 as a positive electrode. The chamber (fourth chamber) 14 at the end of the processing tank 7, which is partitioned from the Li recovery chamber (first chamber) 13 by the bipolar membrane 33, is a second electrode chamber and stores an aqueous solution S2. The first electrode chamber (third chamber) 11 stores an aqueous solution S1. The Li supply chamber (second chamber) 12 stores a Li-containing non-aqueous solution FS. The Li recovery chamber (first chamber) 13 stores a Li recovery aqueous solution RS. The lithium recovery device 1D may further include, as necessary, water supply devices 81 and 84 that supply water (aqueous solutions S1 and S2) to the chambers 11 and 14, and circulation devices 82 and 83 provided in the chambers 12 and 13, respectively. As with the lithium recovery device 1 according to the first embodiment, the lithium recovery device 1D may further include a heating device, a cooling device, a liquid level sensor, a pH meter, an exhaust unit, and the like. The lithium recovery device 1D according to this embodiment is configured as follows, compared to the lithium recovery device 1 according to the first embodiment shown in FIG. 1. Specifically, the bipolar membrane 33 is additionally provided, the second electrode chamber 14 is added at the end of the processing tank 7 on the Li recovery chamber 13 side, and the second electrode 42C is disposed in this second electrode chamber 14.

The aqueous solution S2 is a cation recovery aqueous solution that receives cations from the Li recovery aqueous solution RS in the Li recovery chamber 13 and/or an anion supply aqueous solution that supplies anions to the Li recovery aqueous solution RS. The ions exchanged in the aqueous solution S2 are based on ions that permeate the second ion-conducting membrane 33. As with the aqueous solution S1, the aqueous solution S2 is pure water, for example, at the start of operation of the lithium recovery device 1D. Alternatively, to facilitate the smooth migration of ions (including $H^+$ and/or $OH^-$), the aqueous solution S2 may be an acidic, neutral, or alkaline aqueous solution (electrolyte aqueous solution) that has a relatively high electron conductivity. After the start of operation, it is preferable that the aqueous solution S2 does not have a higher pH (S1 < S2) than the aqueous solution S1 in the first electrode chamber 11. It is even more preferable that the aqueous solution S2 has a lower pH. To this end, it is preferable to use the same aqueous solution for the aqueous solutions S1 and S2, or to use a combination of aqueous solutions so that the aqueous solution S1 has a higher pH than the aqueous solution S2. For example, it is preferable to use a neutral aqueous solution as the aqueous solution S1 and an acidic aqueous solution as the aqueous solution S2.

The second ion-conducting membrane 33 is provided so as to partition the processing tank 7 into the Li recovery chamber 13 and the second electrode chamber 14. The second ion-conducting membrane 33 does not conduct $Li^+$ but conducts at least one type of ions other than $Li^+$ contained in the Li recovery aqueous solution RS and the aqueous solution S2. The second ion-conducting membrane 33 can be a proton-conducting membrane that selectively conducts $H^+$, or a bipolar membrane for water splitting that conducts $H^+$ and $OH^-$. In this embodiment, the bipolar membrane for water splitting is used. The bipolar membrane 33 is disposed with the anion exchange membrane facing the first electrode 41 side (left side in FIG. 7). The second ion-conducting membrane 33 is disposed sufficiently spaced apart from the electrolyte membrane 2, but the distance therebetween is preferably not long. The second ion-conducting membrane 33 corresponds to the pH of the Li recovery aqueous solution RS and the pH of the aqueous solution S2, including after the start of operation. As with the first ion-conducting membrane 31, the second ion-conducting membrane 33 can be a known membrane.

As shown in FIG. 7, the second electrode 42C can be disposed spaced apart from the bipolar membrane 33 in the second electrode chamber 14, allowing the aqueous solution S2 to come into contact with the entire surface of the bipolar membrane 33. On the other hand, to prevent the distance between the first electrode 41 and the second electrode 42C from becoming too long, the distance between the second electrode 42C and the bipolar membrane 33 is preferably short. The second electrode 42C is preferably disposed parallel to the electrolyte membrane 2. The second electrode 42C is formed of an electrode material that has electron conductivity and is stable even when a voltage is applied in the aqueous solution S2. This material preferably has catalytic activity for the reaction of Formula (4) below. The other configuration of the second electrode 42C is the same as that of the second electrode 42B of the second embodiment.
[Chem. 17]

$$2H_2O + 2e^- \rightarrow 2OH^- + H_2 \uparrow \qquad (4)$$

The water supply device 81 and the circulation devices 82 and 83 may have the same configurations as those in the first embodiment. In this embodiment, particularly, to shorten the distance between the first electrode 41 and the second electrode 42C, it is preferable that the distance between the ion exchange membrane 31 and the electrolyte membrane 2 and the distance between the electrolyte membrane 2 and the bipolar membrane 33 are not long, that is, the Li recovery chamber 13 does not have a large volume, as with the Li supply chamber 12. By circulating a large amount of the Li recovery aqueous solution RS relative to the volume of the Li recovery chamber 13, using the circulation device 83, the rate of increase in $Li^+$ concentration in the Li recovery aqueous solution RS can be slowed. This can prevent an increase in the pH of the Li recovery aqueous solution RS and can also prevent a decrease in the chemical potential difference due to the $Li^+$ concentration gradient between both surfaces of the electrolyte membrane 2.

The water supply device 84 supplies water to the second electrode chamber 14. The water supply device 84 replenishes water, since the reaction of Formula (4) reduces water in the aqueous solution S2 during operation. As with the water supply device 81, the water supply device 84 may supply pure water, the aqueous solution S2, or an ionic compound, thereby adjusting the pH and conductivity of the aqueous solution S2.

[Lithium Recovery Method]

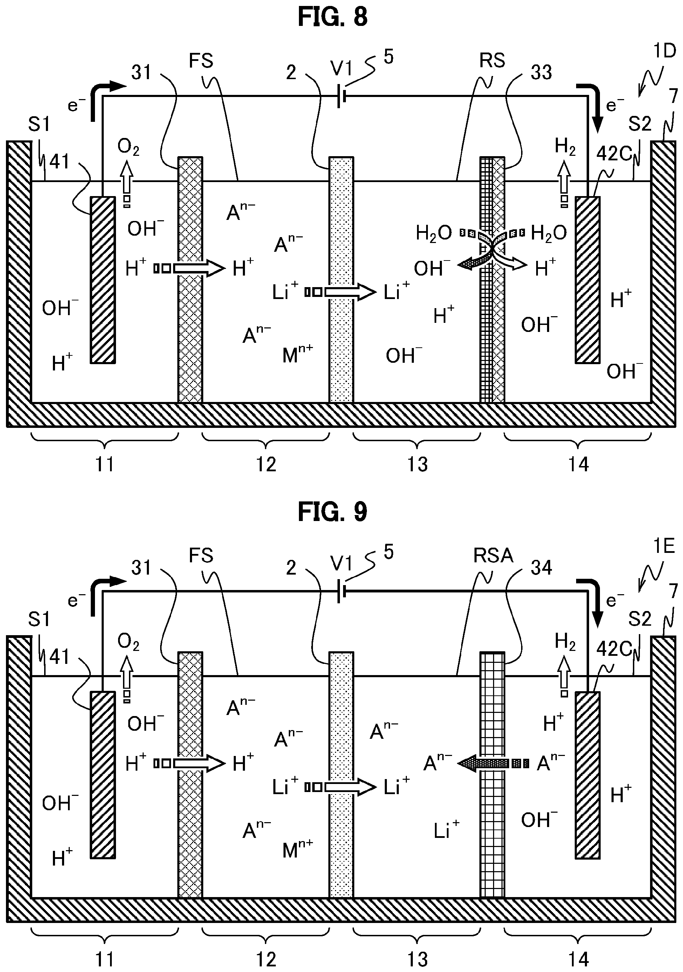

The lithium recovery method according to the third embodiment of the present invention will be described with reference to FIG. 8. The lithium recovery method according to this embodiment is performed as follows using the lithium recovery device 1D. FIG. 8 omits the water supply devices 81 and 84 and the circulation devices 82 and 83.

In this embodiment, as in the first embodiment, the power supply 5 applies a positive voltage V1 (+V1), with respect to the second electrode 42C, to the first electrode 41. This application of the voltage +V1 causes the same reactions as those in the first embodiment in the aqueous solution S1 in the first electrode chamber 11 and in the Li-containing non-aqueous solution FS in the Li supply chamber 12. Specifically, in the aqueous solution S1, the reaction of Formula (1) below or Formula (5) below occurs near the first electrode 41 to generate $O_2$ in the aqueous solution S1. This causes the reaction of Formula (6) below, where $H^+$ of $H_2O$ in the aqueous solution S1 permeates the ion exchange membrane 31 and migrates to the Li-containing non-aqueous solution FS in the Li supply chamber 12. Then, in the Li-containing non-aqueous solution FS, the reaction of Formula (7) below, where $Li^+$ migrates into the electrolyte membrane 2, occurs near the surface of the electrolyte membrane 2.

[Chem. 18]

$$2OH^- \rightarrow H_2O + \frac{1}{2}O_2 \uparrow + 2e^- \quad \cdots (1)$$

$$H_2O \rightarrow \frac{1}{2}O_2 \uparrow + 2H^+ + 2e^- \quad \cdots (5)$$

$$H^+ \rightarrow H^+(\text{non-aq.}) \quad (6)$$

$$Li^+(\text{non-aq.}) \rightarrow Li^+(\text{electrolyte}) \quad (7)$$

Meanwhile, in the aqueous solution S2 in the second electrode chamber 14 in which the second electrode 42C is disposed, the application of the voltage +V1 causes the following reaction. In the vicinity of the second electrode 42C, electrons $e^-$ are supplied to $H_2O$ in the aqueous solution S2, causing the reaction of Formula (4) below to generate $H_2$ and $OH^-$. As $OH^-$ increases, $OH^-$ permeates the bipolar membrane 33 and migrates to the Li recovery aqueous solution RS in the Li recovery chamber 13 to maintain the charge balance. At the same time, $H^+$ of $H_2O$ in the Li recovery aqueous solution RS permeates the bipolar membrane 33 and migrates to the aqueous solution S2. Then, in the Li recovery aqueous solution RS, as $H^+$ decreases and $OH^-$ increases, the reaction of Formula (3) below, which causes $Li^+$ in the electrolyte membrane 2 to migrate to the Li recovery aqueous solution RS, occurs to maintain the charge balance. Furthermore, in the Li recovery aqueous solution RS, the application of the voltage +V1 generates an electric field in the direction from the electrolyte membrane 2 side to the bipolar membrane 33 side, and $Li^+$ is kept away from the vicinity of the rear surface of the electrolyte membrane 2 by electrostatic attraction.

[Chem. 19]

$$2H_2O + 2e^- \rightarrow 2OH^- + H_2 \uparrow \quad (4)$$

$$Li^+(\text{electrolyte}) \rightarrow Li^+ \quad (3)$$

In the lithium recovery method according to this embodiment, as in the first embodiment, by setting the voltage V1 higher than or equal to the electrolysis voltage, the reaction of Formula (1) or Formula (5) and the reaction of Formula (4) occur, causing $Li^+$ migration in the electrolyte membrane 2. In this embodiment, since the second electrode 42C is in contact with the aqueous solution S2 in the second electrode chamber 14, the electrolysis voltage can be easily controlled and the applied voltage V1 can be suppressed by maintaining the liquid volume and concentration of the aqueous solution S2 using the water supply device 84 so that the pH does not fluctuate during operation.

(Modification)

The lithium recovery device 1D according to this embodiment can use an anion exchange membrane 32 as the first ion-conducting membrane, as with the lithium recovery device 1C (see FIG. 4) according to the modification of the first embodiment. The lithium recovery device 1D can also use an anion exchange membrane as the second ion-conducting membrane. The anion exchange membrane used as the second ion-conducting membrane can be a known membrane, as with the anion exchange membrane 32. In this case, when the aqueous solution S2 contains anions (for example, $Cl^-$) other than $OH^-$, these anions migrate to the Li recovery aqueous solution RS together with $OH^-$. When mixing of anions other than $OH^-$into the Li recovery aqueous solution RS is undesirable and the anion exchange membrane is used as the second ion-conducting membrane, it is preferable that the aqueous solution S2 does not contain anions other than $OH^-$, that is, is pure water or an alkaline aqueous solution. Alternatively, a monovalent anion permselective ion exchange membrane that permeates only monovalent anions may be used as the second ion-conducting membrane, and the aqueous solution S2 may contain only anions (for example, $SO_4^{2-}$) with a valence of 2 or more, other than $OH^-$.

In the lithium recovery device according to this embodiment, as in the modification of the first embodiment, a Li recovery non-aqueous solution RSA can be stored in the Li recovery chamber 13. As shown in FIG. 9, a lithium recovery device 1E according to such a modification includes an anion exchange membrane 34 as a second ion-conducting membrane. In this modification, the aqueous solution S2 contains water-soluble anions $A^{n-}$, such as $BF_4^-$, which act as counterions of $Li^+$ in the Li recovery non-aqueous solution RSA. The anion exchange membrane 34 conducts these anions $A^{n-}$ and can be a known membrane, as with the anion exchange membrane 32. The lithium recovery device 1E may include an anion exchange membrane 32 as the first ion-conducting membrane (see FIG. 4).

A lithium recovery method using the lithium recovery device 1E is the same as the method using the lithium recovery device 1D according to the above embodiment (see FIG. 8). In this modification, as shown in FIG. 9, application of a voltage +V1 causes anions $A^{n-}$ in the aqueous solution S2 to permeate the anion exchange membrane 34 and migrate to the Li recovery non-aqueous solution RSA. In the Li recovery non-aqueous solution RSA, $Li^+$ in the electrolyte membrane 2 migrates to maintain the charge balance.

In this modification, as the operating time passes, the pH of the aqueous solution S2 increases due to a decrease in water caused by the reaction of Formula (4) as well as a decrease in anions $A^{n-}$. Therefore, the pH of the aqueous solution S2 may be adjusted during operation as necessary.

The lithium recovery device 1E may include a bipolar membrane for water splitting or a proton-conducting membrane as the second ion-conducting membrane (see FIG. 8). In this case, in the Li recovery non-aqueous solution RSA, $H^+$ migration to the aqueous solution S2 causes $Li^+$ migration in the electrolyte membrane 2. To this end, $HPF_6$, $HBF_4$ or the like as a salt of $H^+$ may be sufficiently dissolved in the Li recovery non-aqueous solution RSA, and the salt of $H^+$ may be added during operation as necessary.

The lithium recovery device according to the third embodiment and the modification thereof can recover Li from a non-aqueous solution as in the first embodiment, and can easily control the electrolysis voltage, thus reducing power consumption. Furthermore, since the electrodes do not come into contact with the Li recovery solution, there is no possibility of contamination of the electrode material into the Li recovery solution, especially in a case of recovering Li in an organic solvent (Li recovery non-aqueous solution).

[Fourth Embodiment]

The lithium recovery device according to the third embodiment includes the two power supplies, as in the second embodiment, and can increase the amount of Li recovered per hour by setting the voltage of each power supply to an appropriate value. A lithium recovery device and a lithium recovery method according to a fourth embodiment of the present invention will be described below.

[Lithium Recovery Device]

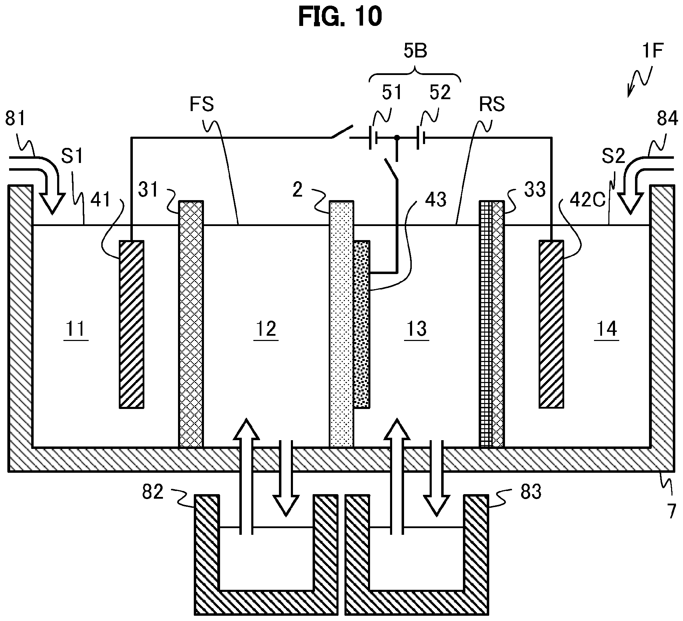

As shown in FIG. 10, a lithium recovery device 1F according to the fourth embodiment of the present invention includes: an electrolyte membrane (lithium ion-conducting electrolyte membrane) 2; an ion exchange membrane (first ion-conducting membrane) 31; a bipolar membrane (second ion-conducting membrane) 33; a processing tank 7 partitioned by the membranes 31, 2, and 33 into four chambers 11, 12, 13, and 14 in this order; a first electrode 41 provided in a first electrode chamber (third chamber) 11 at one end of the processing tank 7; a second electrode 42C provided in a second electrode chamber (fourth chamber) 14; a third electrode 43 provided in contact with the electrolyte membrane 2 in a Li recovery chamber (first chamber) 13; and a power supply 5B connected between the electrodes 41 and 42C with the first electrode 41 as a positive electrode. The power supply 5B includes a first power supply 51 and a second power supply 52 connected in series to a negative electrode of the first power supply. The third electrode is connected to the negative electrode of the first power supply 51. The first electrode chamber (third chamber) 11 stores an aqueous solution S1. The Li supply chamber (second chamber) 12 stores a Li-containing non-aqueous solution FS. The Li recovery chamber (first chamber) 13 stores a Li recovery aqueous solution RS. The second electrode chamber (fourth chamber) 14 stores an aqueous solution S2. The lithium recovery device 1F may further include water supply devices 81 and 84 and circulation devices 82 and 83 as necessary. As with the lithium recovery device 1 according to the first embodiment, the lithium recovery device 1F may further include a heating device, a cooling device, a liquid level sensor, a pH meter, an exhaust unit, and the like. The lithium recovery device 1F according to this embodiment is configured as follows, compared to the lithium recovery device 1B according to the second embodiment (see FIG. 5). Specifically, as in the lithium recovery device 1D according to the third embodiment (see FIG. 7), the bipolar membrane 33 is additionally provided, the second electrode chamber 14 is added to the end of the processing tank 7, and the second electrode 42C is disposed in this second electrode chamber 14.

The components of the lithium recovery device 1F according to this embodiment can have the same configurations as those of the lithium recovery devices 1B and 1D according to the second and third embodiments. In the lithium recovery device 1F, the second electrode 42C is an electrode for forming a potential lower than that of the rear surface of the electrolyte membrane 2 in the Li recovery aqueous solution RS in the Li recovery chamber 13, as with the second electrode 42B of the second embodiment.

(Lithium Recovery Method)

The lithium recovery method according to the fourth embodiment of the present invention will be described with reference to FIG. 11. The lithium recovery method according to this embodiment is performed as follows using the lithium recovery device 1F. FIG. 11 omits the water supply devices 81 and 84 and the circulation devices 82 and 83.

In this embodiment, as in the second embodiment (see FIG. 6), the application of a voltage V1 by the first power supply 51 and the application of a voltage V2 by the second power supply 52 are performed simultaneously. Specifically, the first power supply 51 and the second power supply 52 connected in series (power supply 5B, see FIG. 10) applies a positive voltage (V1+V2), with respect to the second electrode 42C, to the first electrode 41. Then, the same reactions as those in the first embodiment (see FIG. 2) and the second embodiment occur in the aqueous solution S1 in the first electrode chamber 11 and in the Li-containing non-aqueous solution FS in the Li supply chamber 12. Specifically, in the aqueous solution S1, the reaction of Formula (1) below or Formula (5) below occurs near the first electrode 41 to generate $O_2$. This causes the reaction of Formula (6) below, where $H^+$ of $H_2O$ in the aqueous solution S1 permeates the ion exchange membrane 31 and migrates to the Li-containing non-aqueous solution FS in the Li supply chamber 12. Then, in the Li-containing non-aqueous solution FS, the reaction of Formula (7) below, where $Li^+$ migrates into the electrolyte membrane 2, occurs near the surface of the electrolyte membrane 2.

[Chem. 20]

$$2OH^- \rightarrow H_2O + \frac{1}{2}O_2 \uparrow + 2e^- \quad \cdots (1)$$

$$H_2O \rightarrow \frac{1}{2}O_2 \uparrow + 2H^+ + 2e^- \quad \cdots (5)$$

$$H^+ \rightarrow H^+(\text{non-aq.}) \quad (6)$$

$$Li^+(\text{non-aq.}) \rightarrow Li^+(\text{electrolyte}) \quad (7)$$

In the aqueous solution S2 in the second electrode chamber 14 in which the second electrode 42C is disposed, the same reactions as those in the third embodiment (FIG. 8) occur. Specifically, the application of the voltage (V1+V2) causes the reaction of Formula (4) below near the second electrode 42C to generate $H_2$ and $OH^-$. Meanwhile, in the Li recovery aqueous solution RS in the Li recovery chamber 13 in which the third electrode 43 is disposed, as in the second embodiment, the application of the voltage V2 causes OH- in the Li recovery aqueous solution RS to cause the reaction of Formula (1) below near the third electrode 43, generating $H_2O$ and $O_2$. As in the second embodiment, this reaction is slower than the reaction of Formula (4) below near the second electrode 42C (in the aqueous solution S2). Therefore, to maintain the charge balance in the aqueous solutions S2 and RS, $OH^-$ in the aqueous solution S2 permeates the bipolar membrane 33 and migrates to the Li recovery aqueous solution RS. At the same time, $H^+$ in the Li recovery aqueous solution RS permeates the bipolar membrane 33 and migrates to the aqueous solution S2. The reaction of Formula (3) below, which causes $Li^+$ in the electrolyte membrane 2 to migrate, further occurs in the Li recovery aqueous solution RS.

[Chem. 21]

$$2H_2O + 2e^- \rightarrow 2OH^- + H_2 \uparrow \quad (4)$$

$$2OH^- \rightarrow H_2O + \frac{1}{2}O_2 \uparrow +2e^- \quad \cdots \quad (1)$$

$$\text{Li}^+(\text{electrolyte}) \rightarrow \text{Li}^+ \qquad (3)$$

In this embodiment, as in the second embodiment, the application of the voltage V2 causes a potential gradient in the Li recovery aqueous solution RS. The potential of the rear surface of the electrolyte membrane 2 is thus maintained as high as the $O_2$ generation potential. Therefore, the electrolyte membrane 2 does not conduct the electrons e⁻regardless of the potential difference between both surfaces thereof. This potential gradient also increases the Li⁺ concentration gradient between both surfaces of the electrolyte membrane 2. Therefore, the potential difference (voltage V1) between both surfaces of the electrolyte membrane 2 can be increased to cause Li⁺ to quickly migrate to the Li recovery aqueous solution RS. The relative relationship in level between the voltage V1 and the voltage V2 is as described in the second embodiment.

(Modification)

The lithium recovery device 1F according to this embodiment can use an anion exchange membrane 32 as the first ion-conducting membrane, as with the lithium recovery device 1C (see FIG. 4) according to the modification of the first embodiment. The lithium recovery device 1F can also use an anion exchange membrane as the second ion-conducting membrane, as with the lithium recovery device according to the third embodiment. In the lithium recovery device 1F, as in the lithium recovery device 1E (see FIG. 9) according to the modification of the third embodiment, a Li recovery non-aqueous solution RSA can be stored in the Li recovery chamber 13.

The lithium recovery device according to the fourth embodiment and the modification thereof can increase the amount of Li recovered per hour from a non-aqueous solution by increasing the applied voltage as in the second embodiment, and can also reduce power consumption as in the third embodiment.

[Fifth Embodiment]

In the lithium recovery device according to the first embodiment, for $O_2$ generation by the positive electrode, the ion exchange membrane partitions the Li supply chamber, into which the Li-containing non-aqueous solution is introduced, from the first electrode chamber that stores water as the H⁺ supply source. However, a simpler structure may also be used. A lithium recovery method according to a fifth embodiment of the present invention will be described below.

(Lithium Recovery Device)

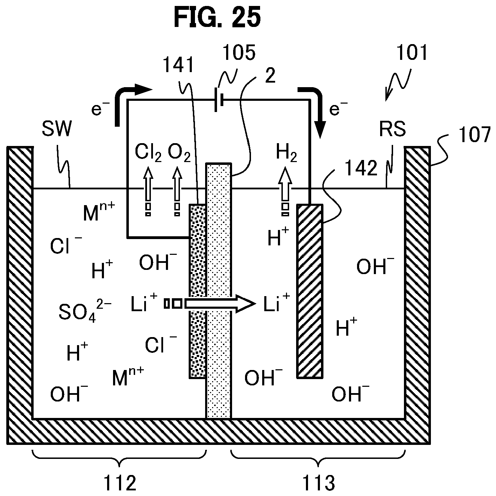

A lithium recovery device used for the lithium recovery method according to the fifth embodiment of the present invention (hereinafter referred to as the lithium recovery device according to the fifth embodiment) will be described. As shown in FIG. 12, a lithium recovery device 1G according to the fifth embodiment includes: an electrolyte membrane (lithium ion-conducting electrolyte membrane) 2; a processing tank 7 partitioned by the electrolyte membrane 2 into a chamber (second chamber) 12 and a chamber (first chamber) 13; electrodes 41A and 42B provided in the chambers 12 and 13, respectively; and a power supply 5 connected between the electrodes 41A and 42B with the chamber (second chamber) 12 side, that is, the electrode 41A as a positive electrode. The chamber (second chamber) 12 is a Li supply chamber and stores a Li-containing non-aqueous solution FS and water ($H_2O$). The chamber (first chamber) 13 is a Li recovery chamber and stores a Li recovery aqueous solution RS. The lithium recovery device 1G may further include, as necessary, water supply devices 81 and 84 that supply water to the chambers 12 and 13, and a stirring device 8 that stirs the Li-containing non-aqueous solution FS and water ($H_2O$) in the chambers 12 and 13. As with the lithium recovery device 1 according to the first embodiment, the lithium recovery device 1G may further include a heating device, a cooling device, a liquid level sensor, a pH meter, an exhaust unit, and the like. The lithium recovery device 1G according to this embodiment has the same structure as that of a device 101 shown in FIG. 25 that recovers Li from a Li-containing aqueous solution such as seawater.

The Li-containing non-aqueous solution FS can be the same non-aqueous solution as those in the first and second embodiments, and may be a water-soluble organic solvent (for example, EC) or a poorly soluble or insoluble organic solvent (for example, EMC). The water stored in the Li supply chamber 12 together with the Li-containing non-aqueous solution FS may be pure water, or an acidic, neutral or alkaline aqueous solution, as with the aqueous solution S1 of the first embodiment. In the Li supply chamber 12, water ($H_2O$) may be stored so that the total valence of the cations such as H$^+$ contained therein is greater than the number of Li$^+$ ions to migrate from the Li-containing non-aqueous solution FS to the Li recovery aqueous solution RS. On the other hand, when there is an excess of water relative to the Li-containing non-aqueous solution FS in the Li supply chamber 12, fewer Li$^+$ comes into contact with the electrolyte membrane 2 relative to the Li$^+$ concentration in the Li-containing non-aqueous solution FS, resulting in a decrease in Li$^+$ mobility. Specifically, at the start of operation of the lithium recovery device 1G, water may be stored in an amount corresponding to the amount of Li-containing non-aqueous solution FS and the Li$^+$ concentration. Alternatively, water may be replenished into the Li supply chamber 12 by the water supply device 81 during operation. As in the first embodiment, the Li recovery aqueous solution RS is preferably pure water or a LiOH aqueous solution at the start of operation of the lithium recovery device 1G.

The first electrode 41A and the second electrode 42B are electrodes for applying a voltage between both surfaces of the electrolyte membrane 2, thus generating a potential difference that is lower on the Li recovery chamber 13 side. To this end, the electrodes 41A and 42B are provided in the chambers 12 and 13 of the processing tank 7, respectively. The first electrode 41A and the second electrode 42B are provided in contact with or spaced apart from the electrolyte membrane 2 so as to face each other, and are preferably disposed parallel to and close to the electrolyte membrane 2. Furthermore, it is preferable that at least one of the first electrode 41A and the second electrode 42B is spaced apart from the electrolyte membrane 2. It is even more preferable that one of the first electrode 41A and the second electrode 42B is in contact with the electrolyte membrane 2 and the other is spaced apart from the electrolyte membrane 2. In FIG. 12, the first electrode 41A is in contact with the electrolyte membrane 2, and the second electrode 42B is spaced apart from the electrolyte membrane 2. The second electrode 42B can have the same configuration as that of the second embodiment.

As described above, the first electrode 41A is provided in contact with the electrolyte membrane 2. Such a first electrode 41A preferably has dimensions that allow voltage application to a wider region of the electrolyte membrane 2. The first electrode 41A preferably has a porous structure such as a net, so that the Li-containing non-aqueous solution FS comes into contact with a sufficient area of the surface of the electrolyte membrane 2, and is continuously circulated. As with the second electrode 42 of the first embodiment, the first electrode 41A may be formed directly on one side of the electrolyte membrane 2, or may be fixed to the processing tank 7 with a jig so as to come into contact with the electrolyte membrane 2. The first electrode 41A is formed of an electrode material that is stable in the Li-containing non-aqueous solution FS and water even when a voltage is applied. As with the first electrode 41 of the first embodiment, the first electrode 41A is formed of a material that has electron conductivity and preferably has catalytic activity for the reaction of Formula (1) below or Formula (5) below. Furthermore, the first electrode 41A is preferably made of a material that is easily processed into the shape as described above.

[Chem. 22]

$$2\mathrm{OH}^- \rightarrow \mathrm{H_2O} + \frac{1}{2}\mathrm{O_2} \uparrow + 2\mathrm{e}^- \quad \cdots \ (1)$$

$$\mathrm{H_2O} \rightarrow \frac{1}{2}\mathrm{O_2} \uparrow + 2\mathrm{H}^+ + 2\mathrm{e}^- \quad \cdots \ (5)$$

In the lithium recovery device 1G, the water supply device 81 supplies water to the Li supply chamber 11, and the water supply device 84 supplies water to the Li recovery chamber 13. During operation, the reaction of Formula (1) or Formula (5) reduces water in the mixture FS+H$_2$O in the Li supply chamber 12, and thus the water supply device 81 replenishes this water. Similarly, during operation, the reaction of Formula (4) reduces water in the Li recovery aqueous solution RS, and thus the water supply device 84 replenishes this water.

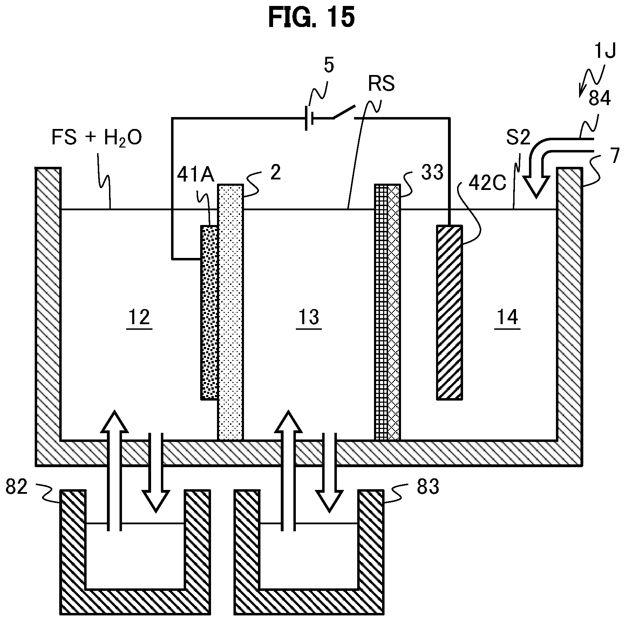

The stirring device 8 includes a screw and a motor for rotating the screw, and can be a known stirring device. The stirring device 8 provided in the Li supply chamber 12 stirs the Li-containing non-aqueous solution FS and water in the Li supply chamber 12, and circulates the mixture FS+H$_2$O in contact with the electrolyte membrane 2 and the first electrode 41A so that it is continuously replaced. Particularly, when the organic solvent in the Li-containing non-aqueous solution FS is poorly soluble or insoluble in water, it is preferable that the mixture FS+H$_2$O is continuously stirred during operation of the lithium recovery device 1G. Alternatively, as in a sixth embodiment to be described later (see FIG. 15), a circulation device 82 may be provided to circulate the mixture FS+H$_2$O between the Li supply chamber 12 and outside the processing tank 7 while stirring the mixture. The stirring device 8 provided in the Li recovery chamber 13 stirs the Li recovery aqueous solution RS in contact with the electrolyte membrane 2 and the second electrode 42B in the Li recovery chamber 13, so that the Li recovery aqueous solution RS is continuously replaced. Alternatively, a circulation device 83 may be provided as in the first embodiment (see FIG. 1).

(Lithium Recovery Method)

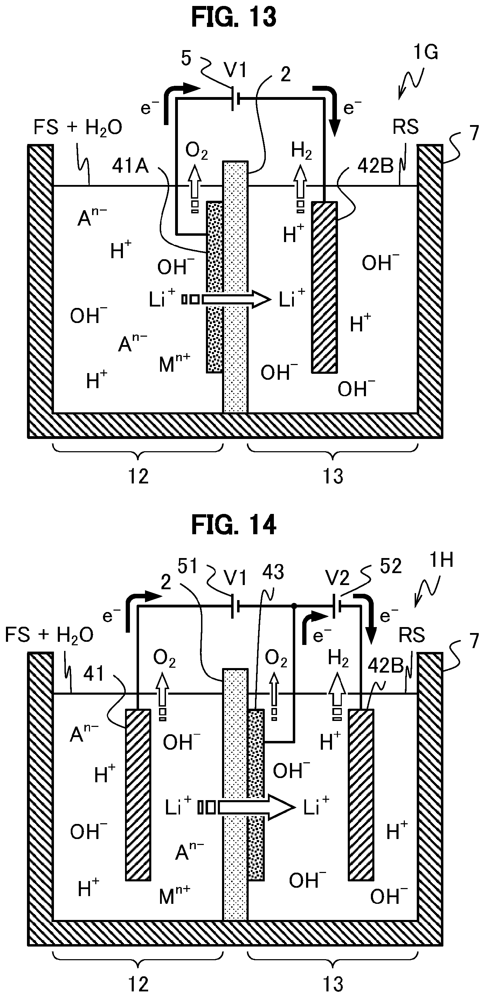

The lithium recovery method according to the fifth embodiment of the present invention will be described with reference to FIG. 13. The lithium recovery method according to this embodiment is performed as follows using the lithium recovery device 1G. FIG. 13 omits the stirring device 8 and the water supply devices 81 and 84.

In the lithium recovery device 1G, as in the first embodiment, the power supply 5 applies a positive voltage V1 (+V1), with respect to the second electrode 42B, to the first electrode 41A. This application of the voltage +V1 causes the following reaction in the mixture FS+$H_2O$ of the Li-containing non-aqueous solution FS and water in the Li supply chamber 12. Here, description will be given of a reaction when the Li-containing non-aqueous solution FS is insoluble in water and the mixture FS+$H_2O$ is separated into an aqueous phase and an organic solvent phase (non-aqueous phase). In the vicinity of the first electrode 41A, as in the first embodiment (see FIG. 2), $OH^-$ in the water ($H_2O$) causes the reaction of Formula (1) below, generating $H_2O$ and $O_2$ and emitting electrons $e^-$ to the first electrode 41A. Alternatively, the water ($H_2O$) causes the reaction of Formula (5) below, generating $H^+$ and $O_2$ and emitting electrons $e^-$ to the first electrode 41A. In the water ($H_2O$) of the mixture, as $OH^-$ decreases or $H^+$ increases, the reaction of Formula (6) below, where $H^+$ in $H_2O$ migrates to the Li-containing non-aqueous solution FS, occurs near the interface with the Li-containing non-aqueous solution FS to maintain the charge balance. When the water in the Li supply chamber 12 is an aqueous solution containing metal ions, the metal ions may also migrate to the Li-containing non-aqueous solution FS. Furthermore, when the Li-containing non-aqueous solution FS contains water-soluble anions $A^{n-}$, the reaction of Formula (11) below may occur, which causes anions $A^{n-}$ to migrate to the water. Then, in the Li-containing non-aqueous solution FS of the mixture, as $H^+$ and other cations increase, or as anions $A^{n-}$ decrease, the reaction of Formula (7) below, where $Li^+$ in the Li-containing non-aqueous solution FS migrates into the electrolyte membrane 2, occurs near the surface of the electrolyte membrane 2, to maintain the charge balance.

[Chem. 23]

$$2OH^- \rightarrow H_2O + \frac{1}{2}O_2 \uparrow + 2e^- \qquad \cdots (1)$$

$$H_2O \rightarrow \frac{1}{2}O_2 \uparrow + 2H^+ + 2e^- \qquad \cdots (5)$$

$$H^+ \rightarrow H^+(\text{non-aq.}) \qquad (6)$$

$$A^{n-}(\text{non-aq.}) \rightarrow A^{n-} \qquad (11)$$

$$Li^+(\text{non-aq.}) \rightarrow Li^+ \text{ (electrolyte)} \qquad (7)$$

When the Li-containing non-aqueous solution FS is soluble in water and the mixture FS+$H_2O$ is single phase, the reaction of Formula (5) occurs near the first electrode 41A even if the water in the Li supply chamber 12 is pure water or an alkaline aqueous solution. Furthermore, the reactions of Formulas (6) and (11) are omitted, and the reaction of Formula (7) occurs.

Meanwhile, in the Li recovery aqueous solution RS in the Li recovery chamber 13, the application of the voltage +V1 causes the reaction of Formula (4) below and the reaction of Formula (3) below, as in the first embodiment, to generate $H_2$ near the second electrode 42B. This causes $Li^+$ in the electrolyte membrane 2 to migrate to the Li recovery aqueous solution RS.

[Chem. 24]

$$2H_2O + 2e^- \rightarrow 2OH^- + H_2 \uparrow \qquad (4)$$

$$Li^+(\text{electrolyte}) \rightarrow Li^+ \qquad (3)$$

After operation is completed, Li can be recovered by the same method as in the first embodiment from the Li recovery aqueous solution RS in the Li recovery chamber 13 and in the circulation chamber of the circulation device 83. Meanwhile, metal ions $M^{n+}$ other than $Li^+$ and the organic solvent can be recovered by known methods appropriate for each of them from the mixture of the Li-containing non-aqueous solution FS and water in the Li supply chamber 12 and in the circulation tank of the circulation device 82.

In the lithium recovery method according to this embodiment, to reuse the organic solvent in the Li-containing non-aqueous solution as the Li source, it is necessary to separate it from water after operation is completed. On the other hand, since no ion exchange membrane is required, the lithium recovery device can have a simpler structure. Furthermore, Li can be recovered even when an ion exchange membrane resistant to organic solvents is difficult to obtain for the organic solvent of the Li-containing non-aqueous solution. The power consumption is also reduced because no energy is required for H$^+$ or other cations contained in water to permeate the ion exchange membrane when migrating to the Li-containing non-aqueous solution (organic solvent).

(Modification)

In the lithium recovery device according to this embodiment, as in the first embodiment, a Li recovery non-aqueous solution RSA (see FIG. 3) can be stored in the Li recovery chamber 13. In this case, the second electrode 42B is formed of an electrode material that is stable even when a voltage is applied in the Li recovery non-aqueous solution RSA. As in the modification (see FIG. 3) of the first embodiment, a second electrode 42A can be provided instead of the second electrode 42B, and metal lithium can be precipitated on the surface of the second electrode 42A and recovered (see FIG. 3).

In the lithium recovery method according to this embodiment, as in the second embodiment (see FIG. 6), the lithium recovery device includes the two power supplies and can increase the amount of Li recovered per hour by setting the voltage of each power supply to an appropriate value. Specifically, as shown in FIG. 14, a lithium recovery device 1H used for a lithium recovery method according to the modification of the fifth embodiment of the present invention (hereinafter referred to as the lithium recovery device 1H according to the modification of the fifth embodiment) includes: an electrolyte membrane (lithium ion-conducting electrolyte membrane) 2; a processing tank 7 partitioned by the electrolyte membrane 2 into two chambers 12 and 13; an electrode 41 provided in a Li supply chamber (second chamber) 12; a third electrode 43 provided in contact with the electrolyte membrane 2 in a Li recovery chamber (first chamber) 13; a second electrode 42B provided spaced apart from the third electrode 43; a first power supply 51; and a second power supply 52 connected in series to a negative electrode of the first power supply 51. The first and second power supplies 51 and 52 are collectively connected between the electrodes 41 and 42B with the first electrode 41 as a positive electrode. The third electrode 43 is connected to the negative electrode of the first power supply 51. As in the above embodiment, the Li supply chamber 12 stores a Li-containing non-aqueous solution FS and water (H2O). The Li recovery chamber 13 stores a Li recovery aqueous solution RS. The lithium recovery device 1H may further include a stirring device 8 and water supply devices 81 and 84 as necessary (see FIG. 12). The components of the lithium recovery device 1H according to this embodiment can have the same configurations as those of the lithium recovery devices 1B and 1G according to the second and fifth embodiments.

In the lithium recovery method according to this modification using the lithium recovery device 1H, as in the second embodiment (see FIG. 6), the application of a voltage V1 by the first power supply 51 and the application of a voltage V2 by the second power supply 52 are performed simultaneously, as shown in FIG. 14. The reaction in the mixture FS+H$_2$O of the Li-containing non-aqueous solution FS and water in the Li supply chamber 12 is the same as in the above embodiment (see FIG. 13). On the other hand, the reaction in the Li recovery aqueous solution RS in the Li recovery chamber 13 is the same as in the second embodiment. The relative relationship in level between the voltage V1 and the voltage V2 is as described in the second embodiment.

In the lithium recovery device according to this modification, as in the second embodiment, a Li recovery non-aqueous solution RSA can also be stored in the Li recovery chamber 13 (see FIG. 3).

The lithium recovery methods according to the fifth embodiment and the modification thereof can recover Li from a non-aqueous solution, as in the first embodiment, using a lithium recovery device with a simple structure similar to that of the related art (see FIG. 25).

[Sixth Embodiment]

In the lithium recovery device according to the fifth embodiment, the Li recovery chamber side of the processing tank can also be partitioned by an ion exchange membrane to provide a second electrode chamber, as in the third embodiment. A lithium recovery method according to a sixth embodiment of the present invention will be described below.

[Lithium Recovery Device]

As shown in FIG. 15, a lithium recovery device 1J according to the sixth embodiment of the present invention includes: an electrolyte membrane (lithium ion-conducting electrolyte membrane) 2; a bipolar membrane (second ion-conducting membrane) 33; a processing tank 7 partitioned by the electrolyte membrane 2 and the bipolar membrane 33 into three chambers 12, 13, and 14 in this order; a first electrode 41A provided in the chamber (second chamber) 12 at one end of the processing tank 7; a second electrode 42C provided in the chamber (third chamber) 14 at the other end of the processing tank 7; and a power supply 5 connected between the electrodes 41A and 42C with the first electrode 41A as a positive electrode. The chamber (second chamber) 12 at one end of the processing tank 7 partitioned by the electrolyte membrane 2 is a Li supply chamber, and stores a Li-containing non-aqueous solution FS and water ($H_2O$). The chamber (first chamber) 13 in the middle is a Li recovery chamber, and stores a Li recovery aqueous solution RS. The chamber (third chamber) 13 at the other end partitioned by the bipolar membrane 33 is a second electrode chamber, and stores an aqueous solution S2. The lithium recovery device 1J may further include, as necessary, circulation devices 82 and 83 and a water supply device 84. As with the lithium recovery device 1 according to the first embodiment, the lithium recovery device 1J may further include a heating device, a cooling device, a liquid level sensor, a pH meter, an exhaust unit, and the like. The lithium recovery device 1J according to this embodiment is configured as follows, compared to the lithium recovery device 1G according to the fifth embodiment shown in FIG. 12. Specifically, the bipolar membrane 33 is additionally provided, the second electrode chamber 14 is added at the end of the processing tank 7 on the Li recovery chamber 13 side, and the second electrode 42C is disposed in this second electrode chamber 14.

The components of the lithium recovery device 1J according to this embodiment can have the same configurations as those of the lithium recovery devices 1D and 1G according to the third and fifth embodiments. In the lithium recovery device 1J, the circulation device 82 circulates the mixture FS+$H_2O$ between the Li supply chamber 12 and outside the processing tank 7 while stirring the mixture. The circulation device 82 also replenishes water lost by the reaction of Formula (1) or Formula (5). Alternatively, the lithium recovery device 1J may include a stirring device 8 and a water supply device 81, as in the lithium recovery device 1G according to the fifth embodiment. Furthermore, it is preferable that the aqueous solution S2 does not have a high pH relative to the mixture FS+$H_2O$ in the Li supply chamber 12 or the water (aqueous solution) therein. It is more preferable that the aqueous solution S2 has a lower pH.

(Lithium Recovery Method)

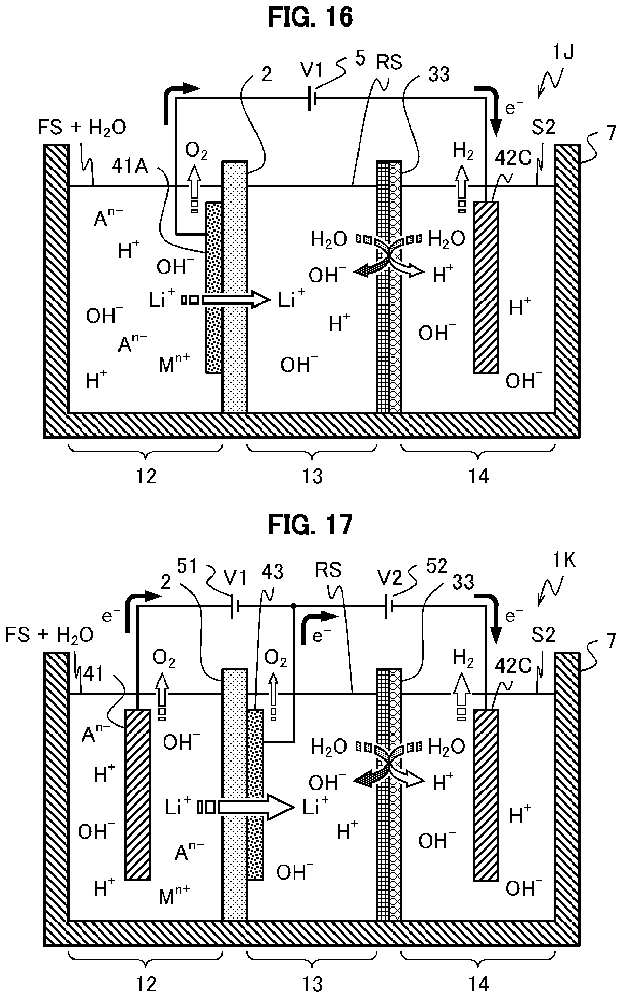

The lithium recovery method according to the sixth embodiment of the present invention will be described with reference to FIG. 16. The lithium recovery method according to this embodiment is performed as follows using the lithium recovery device 1J. FIG. 16 omits the circulation devices 82 and 83 and the water supply device 84.

In the lithium recovery method according to the sixth embodiment of the present invention, as in the first embodiment, the power supply 5 applies a positive voltage V1 (+V1), with respect to the second electrode 42C, to the first electrode 41A. The reaction in the mixture FS+$H_2O$ of the Li-containing non-aqueous solution FS and water in the Li supply chamber 12 is the same as in the fifth embodiment (see FIG. 13). On the other hand, the reactions in the Li recovery aqueous solution RS in the Li recovery chamber 13 and the aqueous solution S2 in the second electrode chamber 14 are the same as in the third embodiment (see FIG. 8).

(Modification)

In the lithium recovery device according to this embodiment, as in the third embodiment, an anion exchange membrane can be used as the second ion-conducting membrane. Furthermore, by using the anion exchange membrane as the second ion-conducting membrane, a Li recovery non-aqueous solution RSA can be stored in the Li recovery chamber 13, as in the modification of the third embodiment (see FIG. 9).

The lithium recovery device according to this embodiment includes the two power supplies, as in the fourth embodiment, and can increase the amount of Li recovered per hour by setting the voltage of each power supply to an appropriate value. Specifically, as shown in FIG. 17, a lithium recovery device 1K according to a modification of the sixth embodiment of the present invention includes: an electrolyte membrane (lithium ion-conducting electrolyte membrane) 2; a bipolar membrane (second ion-conducting membrane) 33; a processing tank 7 partitioned by the electrolyte membrane 2 and the bipolar membrane 33 into three chambers 12, 13, and 14 in this order; a first electrode 41 provided in a Li supply chamber (second chamber) 12; a second electrode 42C provided in a second electrode chamber (third chamber) 14; a third electrode 43 provided in contact with the electrolyte membrane 2 in a Li recovery chamber (first chamber) 13; a first power supply 51; and a second power supply 52 connected in series to a negative electrode of the first power supply 51. The first and second power supplies 51 and 52 are collectively connected between the electrodes 41 and 42C with the first electrode 41 as a positive electrode. The third electrode 43 is connected to the negative electrode of the first power supply 51. As in the above embodiment, the Li supply chamber 12 stores a Li-containing non-aqueous solution FS and water ($H_2O$). The Li recovery chamber 13 stores a Li recovery aqueous solution RS. The second electrode chamber 14 stores an aqueous solution S2. The lithium recovery device 1K may further include circulation devices 82 and 83 and a water supply device 84 as necessary (see FIG. 15). The components of the lithium recovery device 1K according to this modification can have the same configurations as those of the lithium recovery devices 1F and 1J according to the fourth and sixth embodiments (see FIGs. 10 and 15).

In a lithium recovery method according to this modification using the lithium recovery device 1K, as in the second embodiment (see FIG. 6), the application of a voltage V1 by the first power supply 51 and the application of a voltage V2 by the second power supply 52 are performed simultaneously, as shown in FIG. 17. The reaction in the mixture FS+$H_2O$ of the Li-containing non-aqueous solution FS and water in the Li supply chamber 12 is the same as in the fifth embodiment (see FIG. 13). On the other hand, the reactions in the Li recovery aqueous solution RS in the Li recovery chamber 13 and in the aqueous solution S2 in the second electrode chamber 14 are the same as in the fourth embodiment (see FIG. 11). The relative relationship in level between the voltage V1 and the voltage V2 is as described in the second embodiment.

As with the lithium recovery device according to the above embodiment, the lithium recovery device 1K according to this modification can use an anion exchange membrane as the second ion-conducting membrane. Furthermore, by using the anion exchange membrane as the second ion-conducting membrane, a Li recovery non-aqueous solution RSA can be stored in the Li recovery chamber 13.

The lithium recovery method according to the sixth embodiment and the modification thereof can recover Li from a non-aqueous solution as in the third embodiment, and can easily control the electrolysis voltage to reduce power consumption and achieving a lithium recovery device with a relatively simple structure.

[Seventh Embodiment]

In the lithium recovery device according to the third embodiment, no electrodes are placed in the Li supply chamber or the Li recovery chamber. Instead, the two chambers are partitioned on both outer sides by the ion exchange membranes, thus providing the first electrode chamber and the second electrode chamber. Ions other than $Li^+$ permeate the ion-conducting membranes between the first electrode chamber and the Li supply chamber and between the Li recovery chamber and the second electrode chamber, allowing $Li^+$ to permeate the electrolyte membrane. Therefore, by connecting a plurality of pairs of Li supply chambers and Li recovery chambers partitioned by ion-conducting membranes that do not conduct $Li^+$ and disposing the first electrode and the second electrode in the chambers at both ends, a large amount of Li source (Li-containing non-aqueous solution) can be processed with a single power supply, thereby increasing the amount of Li recovered. A multi-chamber lithium recovery device according to an embodiment of the present invention will be described below.

(Multi-Chamber Lithium Recovery Device)

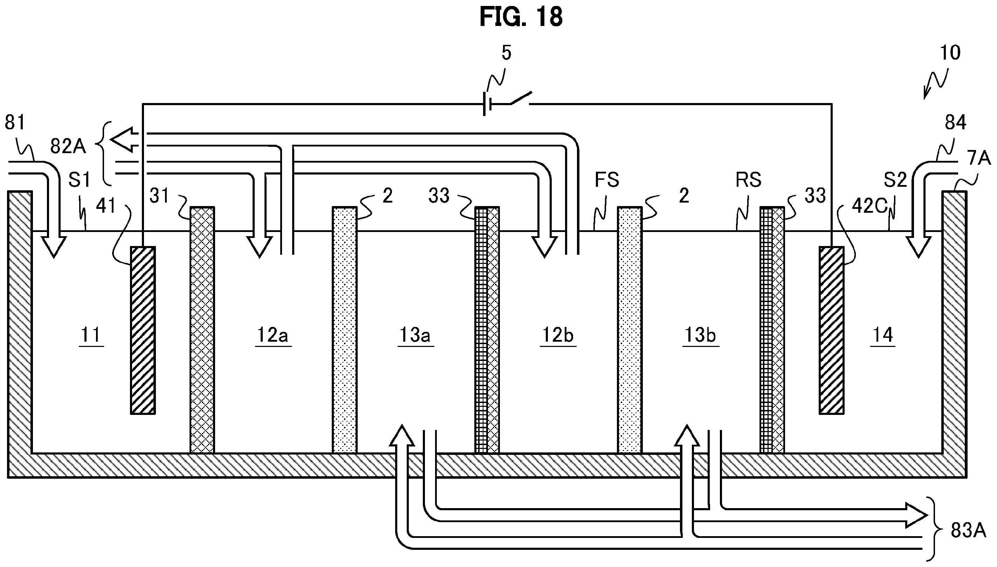

As shown in FIG. 18, a multi-chamber lithium recovery device 10 according to an embodiment of the present invention includes: two electrolyte membranes (lithium ion-conducting electrolyte membranes) 2; an ion exchange membrane (first ion-conducting membrane) 31; two bipolar membranes (second ion-conducting membranes) 33; a processing tank 7A partitioned into six chambers by the electrolyte membranes 2 and the ion-conducting membranes 31 and 33; a power supply 5; a first electrode 41 connected to a positive electrode of the power supply 5; and a second electrode 42C connected to a negative electrode of the power supply 5. The electrolyte membranes 2 and the ion-conducting membranes 31 and 33 are alternately disposed, with the ion exchange membrane 31 disposed at one end. Therefore, the membranes 31, 2, 33, 2, and 33 are disposed in this order from one end side, partitioning the processing tank 7A into chambers 11, 12a, 13a, 12b, 13b, and 14. The first electrode 41 is provided in the first electrode chamber 11 at one end of the processing tank 7A partitioned by the ion exchange membrane 31, and the second electrode 42C is provided in the second electrode chamber 14 at the other end. The chambers 11 and 14 each store water (aqueous solutions S1 and S2). The chambers 12a and 12b are Li supply chambers each storing a Li-containing non-aqueous solution FS. The chambers 13a and 13b are Li recovery chambers each storing a Li recovery aqueous solution RS. The multi-chamber lithium recovery device 10 may further include water supply devices 81 and 84 and circulation devices 82A and 83A as necessary. The multi-chamber lithium recovery device 10 according to this embodiment is configured by connecting two lithium recovery devices 1D according to the third embodiment (see FIG. 7). Between the lithium recovery devices 1D and 1D adjacent to each other, the second electrode chamber 14 in one of the devices is removed, and the Li recovery chamber 13 (13a) in one of the devices is integrated with the first electrode chamber 11 in the other device. In FIG. 18, the multi-chamber lithium recovery device 10 includes the two electrolyte membranes 2 and the two pairs of Li supply chambers and Li recovery chambers, but the numbers thereof may be any number greater than or equal to two.

The processing tank 7A has dimensions corresponding to the number of partitioned chambers, and can otherwise have the same configuration as the processing tank 7 of the lithium recovery device 1.

As with the circulation device 82 of the lithium recovery device 1, the circulation device 82A circulates the Li-containing non-aqueous solution FS so that the Li-containing non-aqueous solution FS is continuously replaced in each of the Li supply chambers 12a and 12b during operation, and so that the Li-containing non-aqueous solution FS in contact with the electrolyte membranes 2 is continuously replaced. The circulation device 82A can have the same configuration as the circulation device 82, except for including a circulation path such as a pipe communicating with each of the Li supply chambers 12a and 12b. Although one circulation device 82A circulates all of the Li-containing non-aqueous solutions FS in the Li supply chambers 12a and 12b, a circulation device 82 may be provided for each of the Li supply chambers 12a and 12b to circulate the Li-containing non-aqueous solution FS in an independent system.

As with the circulation device 83 of the lithium recovery device 1, the circulation device 83A circulates the Li recovery aqueous solution RS so that the Li recovery aqueous solution RS is continuously replaced in each of the Li recovery chambers 13a and 13b during operation, and so that the Li recovery aqueous solution RS in contact with the electrolyte membranes 2 is continuously replaced. The circulation device 83A can have the same configuration as the circulation device 83, except for including a circulation path such as a pipe communicating with each of the Li recovery chambers 13a and 13b. Alternatively, a circulation device 83 may be provided for each of the Li recovery chambers 13a and 13b to circulate the Li recovery aqueous solution RS in an independent system.

Other components of the multi-chamber lithium recovery device 10 according to this embodiment can have the same configurations as those of the lithium recovery devices 1 and 1D according to the first and third embodiments.

(Lithium Recovery Method)

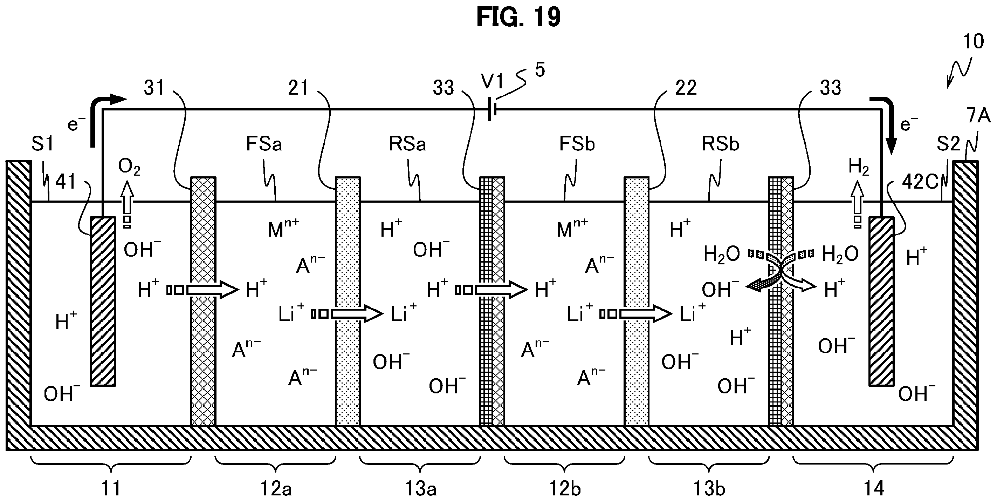

A lithium recovery method according to a seventh embodiment of the present invention will be described with reference to FIG. 19. The lithium recovery method according to this embodiment is performed as follows using the multi-chamber lithium recovery device 10. FIG. 19 omits the water supply devices 81 and 84 and the circulation devices 82A and 83A. The electrolyte membranes 2 are denoted by different reference numerals, such as the electrolyte membranes 21 and 22, to distinguish therebetween. The electrolyte membrane 21 partitions the Li supply chamber 12a from the Li recovery chamber 13a. The electrolyte membrane 22 partitions the Li supply chamber 12b from the Li recovery chamber 13b. The Li-containing non-aqueous solutions FS in the Li supply chambers 12a and 12b will be referred to as Li-containing non-aqueous solutions FSa and FSb, respectively, as appropriate. Similarly, the Li recovery aqueous solutions RS in the Li recovery chambers 13a and 13b will be referred to as Li recovery aqueous solutions RSa and RSb, respectively, as appropriate (the same applies to a modification to be described later).

In this embodiment, as in the first embodiment, the power supply 5 applies a positive voltage V1 (+V1), with respect to the second electrode 42C, to the first electrode 41. The reactions caused by this application of the voltage +V1 in the aqueous solution S1 in the first electrode chamber 11 and in the Li-containing non-aqueous solution FSa in the Li supply chamber 12a are the same as those in the aqueous solution S1 and in the Li-containing non-aqueous solution FS in the first embodiment. Specifically, in the aqueous solution S1, the reaction of Formula (1) below or Formula (5) below occurs near the first electrode 41 to generate $O_2$ in the aqueous solution S1. This causes the reaction of Formula (6) below, where $H^+$ of $H_2O$ in the aqueous solution S1 permeates the ion exchange membrane 31 and migrates to the Li-containing non-aqueous solution FSa in the Li supply chamber 12a. Then, in the Li-containing non-aqueous solution FSa, the reaction of Formula (7) below, where $Li^+$ migrates into the electrolyte membrane 2, occurs near the surface of the electrolyte membrane 2.

[Chem. 25]

$$2OH^- \rightarrow H_2O + \frac{1}{2}O_2 \uparrow + 2e^- \quad \cdots (1)$$

$$H_2O \rightarrow \frac{1}{2}O_2 \uparrow + 2H^+ + 2e^- \quad \cdots (5)$$

$$H^+ \rightarrow H^+(\text{non-aq.}) \quad (6)$$

$$Li^+(\text{non-aq.}) \rightarrow Li^+(\text{electrolyte}) \quad (7)$$

The application of the voltage +V1 also causes the following reaction in the Li recovery aqueous solution RSa in the Li recovery chamber 13a. Specifically, $H^+$ of water ($H_2O$) in the Li recovery aqueous solution RSa permeates the bipolar membrane 33 and migrates to the Li-containing non-aqueous solution FSb in the Li supply chamber 12b. As $H^+$ decreases, the reaction of Formula (3) below, where $Li^+$ in the electrolyte membrane 21 migrates to the Li recovery aqueous solution RSa, occurs near the surface (rear surface) of the electrolyte membrane 21 on the Li recovery chamber 13a side to maintain the charge balance. Furthermore, in the Li recovery aqueous solution RSa, the application of the voltage +V1 generates an electric field in the direction from the electrolyte membrane 21 side to the bipolar membrane 33 side, and $Li^+$ is kept away from the vicinity of the rear surface of the electrolyte membrane 21 by electrostatic attraction. Meanwhile, in the Li-containing non-aqueous solution FSb in the Li supply chamber 12b, the application of the voltage +V1 generates an electric field in the direction from the bipolar membrane 33 side to the electrolyte membrane 22 side, and the cations $Li^+$ and

$M^{n+}$ in the Li-containing non-aqueous solution FSb are attracted by electrostatic force to the surface of the electrolyte membrane 22. As $H^+$ increases, the reaction of Formula (7) below, where $Li^+$ in the Li-containing non-aqueous solution FSb migrates into the electrolyte membrane 22, occurs near the surface of the electrolyte membrane 22 to maintain the charge balance. Specifically, the same reactions as in the aqueous solution S1 and the Li-containing aqueous solution FSa occur in the Li recovery aqueous solution RSa and the Li-containing aqueous solution FSb, respectively. The Li recovery aqueous solution RS (RSa) in the Li recovery chamber 13a has the same effect as the aqueous solution S1.

[Chem. 26]

$$Li^+(electrolyte) \rightarrow Li^+ \qquad (3)$$

$$Li^+(non\text{-}aq.) \rightarrow Li^+(electrolyte) \qquad (7)$$

On the other hand, the reactions in the aqueous solution S2 in the second electrode chamber 14 and the Li recovery aqueous solution RSb in the Li recovery chamber 13b are the same as those in the aqueous solution S2 and the Li recovery aqueous solution RS in the third embodiment (see FIG. 8). Specifically, in the aqueous solution S2, the reaction of Formula (4) below occurs near the second electrode 42C to generate $OH^-$. This causes $OH^-$ to permeate the bipolar membrane 33 and migrate to the Li recovery aqueous solution RSb in the Li recovery chamber 13b. At the same time, $H^+$ in the Li recovery aqueous solution RSb permeates the bipolar membrane 33 and migrates to the aqueous solution S2. Then, as $H^+$ decreases and $OH^-$ increases, the reaction of Formula (3) below, which causes $Li^+$ in the electrolyte membrane 22 to migrate, occurs in the Li recovery aqueous solution RSb. Furthermore, in the Li recovery aqueous solution RSb, the application of the voltage +V1 generates an electric field in the direction from the electrolyte membrane 22 side to the bipolar membrane 33 side, and $Li^+$ is kept away from the vicinity of the rear surface of the electrolyte membrane 22 by electrostatic attraction.

[Chem. 27]

$$2H_2O + 2e^- \rightarrow 2OH^- + H_2 \uparrow \qquad (4)$$

$$Li^+(electrolyte) \rightarrow Li^+ \qquad (3)$$

(Modification)

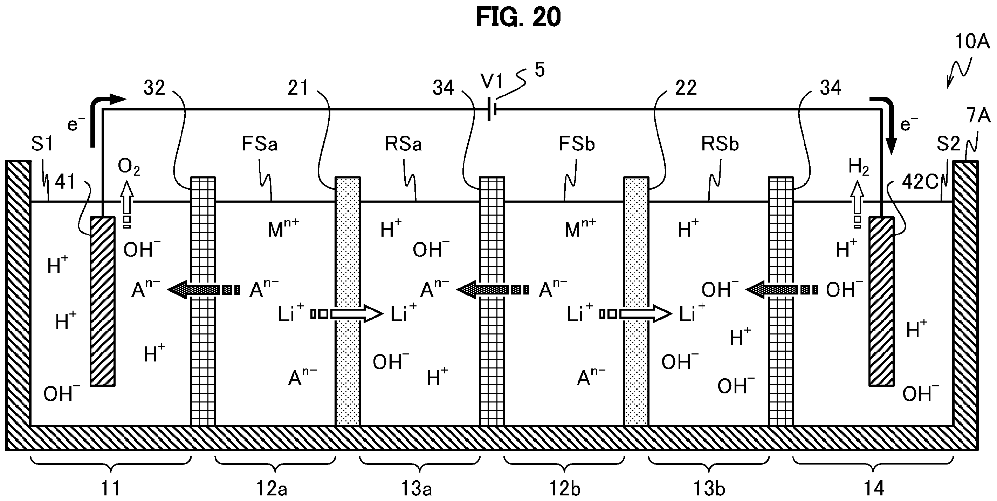

In the multi-chamber lithium recovery device according to this embodiment, as in the lithium recovery device 1C (see FIG. 4) according to the modification of the first embodiment, when the anions $A^{n-}$ contained in the Li-containing non-aqueous solution FS include water-soluble anions, anion exchange membranes 32 and 34 can be used as the first and second ion-conducting membranes. In a multi-chamber lithium recovery device 10A according to this modification, as shown in FIG. 20, anions $A^{n-}$ contained in the Li-containing non-aqueous solution FS migrate to the Li recovery aqueous solution RS. For example, the anion exchange membrane 32 may be used as the first ion-conducting membrane, and the bipolar membrane 33 or a proton-conducting membrane may be used as the second ion-conducting membrane. Furthermore, as for the second ion-conducting membrane, the membrane disposed between the electrolyte membranes 2 may be of a different type from the membrane that partitions the second electrode chamber 14. Particularly, as in the above embodiment, the second ion-conducting membrane disposed between the electrolyte membranes 2 can be the bipolar membrane 33 or proton-conducting membrane, thereby preventing anions $A^{n-}$ from being mixed into the Li recovery aqueous solution RS.

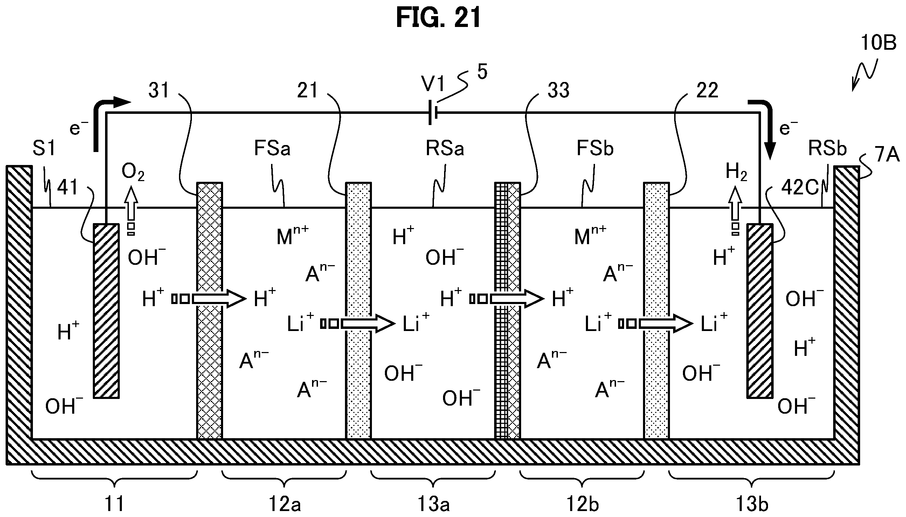

As shown in FIG. 21, the multi-chamber lithium recovery device according to this embodiment may have the second electrode 42C disposed in the Li recovery chamber 13b, which is the chamber at the end opposite to the first electrode chamber 11, without providing the second electrode chamber 14. In a multi-chamber lithium recovery device 10B according to this modification, the same reaction as in the Li recovery aqueous solution RS in the first embodiment (see FIG. 2) occurs in the Li recovery aqueous solution RSb in the Li recovery chamber 13b.

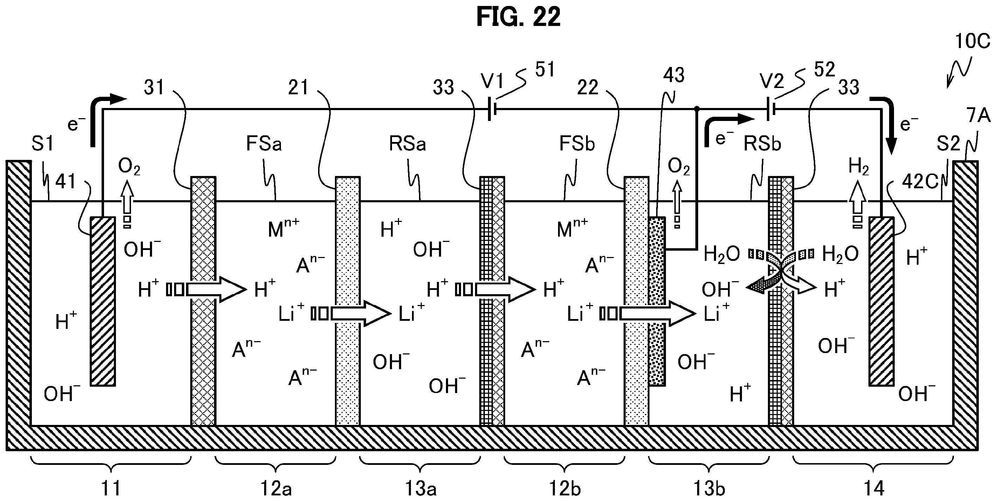

As with the lithium recovery device 1B according to the second embodiment (see FIG. 5), the multi-chamber lithium recovery device according to this embodiment can increase the amount of Li recovered per hour by including two power supplies and setting the voltage of each power supply to an appropriate value. As shown in FIG. 22, in a multi-chamber lithium recovery device 10C according to this modification, a third electrode 43 in contact with the electrolyte membrane 22 is provided in the Li recovery chamber 13b neighboring the second electrode chamber 14, as in the lithium recovery device 1F according to the fourth embodiment (see FIG. 10). Moreover, in a configuration in which the second electrode chamber 14 is not provided, as in the multi-chamber lithium recovery device 10B according to the above modification, a second electrode 42C is disposed spaced apart from the electrolyte membrane 22 and the third electrode 43 in the Li recovery chamber 13b, as in the lithium recovery device 1B according to the second embodiment.

The multi-chamber lithium recovery devices according to this embodiment and the modifications thereof can recover Li from a non-aqueous solution, as with the lithium recovery device according to the first embodiment, and can also reduce power consumption per amount of Li recovered.

**EXAMPLE**

The lithium recovery device and the lithium recovery method according to the present invention have been described above based on the embodiments of the present invention. Hereinafter, examples in which the effects of the present invention have been confirmed will be described. It should be noted that the present invention is not limited to these examples and the above embodiments. It goes without saying that various changes and modifications based on these descriptions are also included in the spirit of the present invention.

[Experiment 1]

With the lithium recovery device shown in FIG. 1 and the lithium recovery method according to the first embodiment of the present invention, a lithium migration amount per hour when a voltage is applied is measured.

(Preparation of Lithium Recovery Device)

A lithium recovery device according to Example 1 of the present invention uses a 0.5 mm thick plate-like $La_{0.57}Li_{0.29}TiO_3$ (lithium-ion conducting ceramic LLTO, produced by TOHO TITANIUM CO., LTD.) as an electrolyte membrane, and a bipolar membrane for water splitting (NEOSEPTA, produced by Astom Co., Ltd.) as an ion-conducting membrane. The electrolyte membrane and the ion-conducting membrane are both 50 mm long (height) $\times$ 50mm wide (depth). The bipolar membrane and the electrolyte membrane are set parallel to each other at a 70 mm interval in a processing tank made of glass, partitioning the processing tank into three chambers. A 40 mm $\times$ 30 mm Pt mesh electrode (reference numeral 41 in FIG. 1) is disposed so as to face the ion-conducting membrane in the first electrode chamber (reference numeral 11 in FIG. 1) at the end partitioned by the ion-conducting membrane. A 40 mm $\times$ 30 mm Ni mesh electrode (reference numeral 42 in FIG. 1) is disposed so as to face the electrolyte membrane in the Li recovery chamber (reference numeral 13 in FIG. 1) at the end partitioned by the electrolyte membrane, at a distance of 15 mm from the electrolyte membrane. The distance between the two electrodes is 100 mm. A power supply is connected between the two electrodes with the first electrode chamber side as a positive electrode, thus forming a lithium recovery device. An ammeter is inserted between the positive electrode of the power supply and the Pt mesh electrode.

A 1 mol/L lithium perchlorate ($LiClO_4$) non-aqueous solution (solvent: EC and DMC in 1:1 volume ratio) is prepared as a Li source. A 0.1 mol/L lithium hydroxide (LiOH) aqueous solution is prepared as a $H^+$ supply source and a Li recovery aqueous solution. 150 ml of Li-containing non-aqueous solution is fed into the Li supply chamber partitioned by the ion-conducting membrane and the electrolyte membrane in the lithium recovery device. 130 ml of LiOH aqueous solution is fed into the first electrode chamber and the Li recovery chamber, such that the electrodes are completely immersed.

As a lithium recovery device according to a comparative example, an electrolyte membrane is set in a processing tank made of glass, and the processing tank is partitioned into two chambers, a Li supply chamber and a Li recovery chamber. A Pt mesh electrode is disposed in the Li supply chamber and a Ni mesh electrode is disposed in the Li recovery chamber. A power supply and an ammeter are connected as in Example 1. The distance between the electrodes is 7 mm. The electrolyte membrane and the electrodes are the same as those in Example 1. The same $LiClO_4$ non-aqueous solution and LiOH aqueous solution as in Example 1 are fed into the Li supply chamber and the Li recovery chamber.

(Lithium Recovery Experiment)

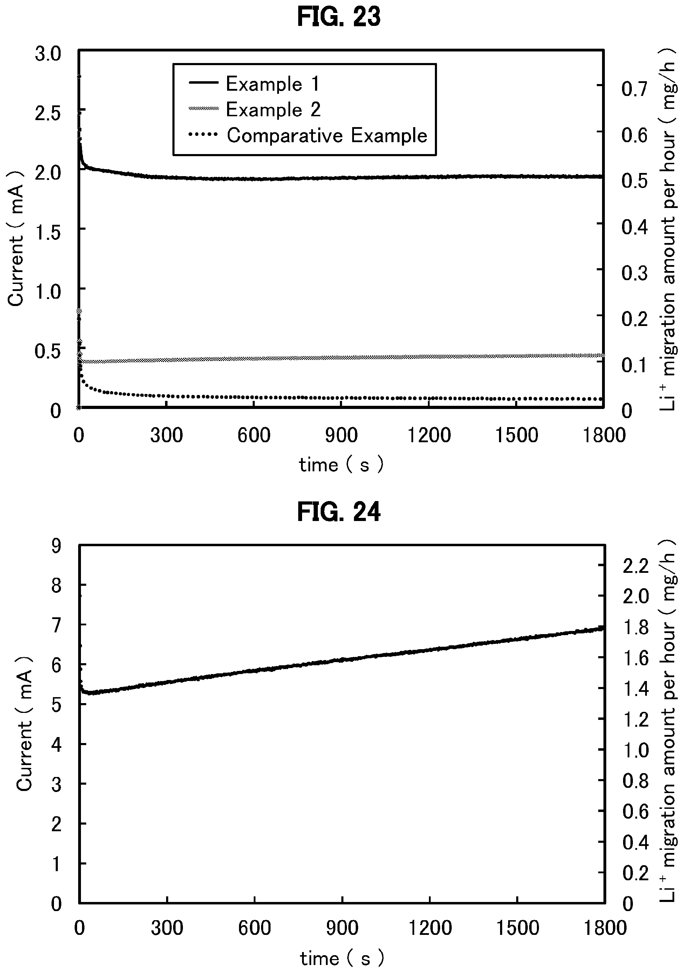

A DC voltage of 2 V is continuously applied by the power supply, and the transition in current value is measured with the ammeter. FIG. 23 shows the transition in current value and the migration amount of $Li^+$ per hour, calculated by using the current value as $Li^+$ that has migrated, for Example 1 and the comparative example. The $Li^+$ migration amount per hour is calculated as current $\times$ time $\times$ Li atomic weight/Faraday constant. The Li atomic weight is 6.941 g/mol, and the Faraday constant is 96485 C/mol.

As shown in FIG. 23, in Example 1, a sufficient current flows stably, suggesting that the electrodialysis causes $Li^+$ in the Li-containing non-aqueous solution to migrate to the water (LiOH aqueous solution) in the Li recovery chamber. In the comparative example, on the other hand, the current is as small as about 1/20 of that in Example, resulting in almost no $Li^+$ migration.

It is confirmed from above that the lithium recovery device and the lithium recovery method according to the first embodiment of the present invention can stably recover Li using a non-aqueous solution having $Li^+$ together with other cations dissolved in an organic solvent as a Li source, without decomposing the organic solvent.

[Experiment 2]

For the lithium recovery method according to the fifth embodiment of the present invention shown in FIG. 12, the migration amount per hour when a voltage is applied is measured in the same manner as in Example 1.

For a lithium recovery method according to Example 2 of the present invention, the lithium recovery device according to the comparative example of Experiment 1 is used. A 1 mol/L $LiPF_6$ ethanol solution is prepared as the Li source. A 1 mol/L hydroxide sodium (NaOH) aqueous solution is prepared as a $H^+$ source. 60 mL of the $LiPF_6$ ethanol solution and 70 mL of the NaOH aqueous solution are fed into the Li supply chamber (reference numeral 12 in FIG. 12). As in Example 1, a 0.1 mol/L LiOH aqueous solution is fed into the Li recovery chamber (reference numeral 13 in FIG. 12).

A DC voltage of 2 V is continuously applied by the power supply, and the transition in current value is measured with the ammeter. FIG. 23 shows the transition in current value and the migration amount of $Li^+$ per hour, calculated by using the current value as $Li^+$ that has migrated.

As shown in FIG. 23, in Example 2 of the present invention, a sufficient current, about five times that of the comparative example of Experiment 1, flows stably, suggesting that the electrodialysis causes $Li^+$ in the Li-containing non-aqueous solution to migrate to the water (LiOH aqueous solution) in the Li recovery chamber, as in Example 1.

It is confirmed from above that, as in the first embodiment, the lithium recovery method according to the third embodiment of the present invention can stably recover Li using a non-aqueous solution having $Li^+$ together with other cations dissolved in an organic solvent as a Li source, without decomposing the organic solvent. Furthermore, a lithium recovery device with a simple structure similar to that of the related art (comparative example) can be used.

[Experiment 3]

For the lithium recovery device and the lithium recovery method according to the second embodiment of the present invention shown in FIG. 5, the lithium migration amount per hour when a voltage is applied is measured in the same manner as in Example 1.

(Preparation of Lithium Recovery Device)

A lithium recovery device according to Example 3 of the present invention is configured as follows, compared to the lithium recovery device according to Example 1 (see FIG. 1). Specifically, the power supply is used as a first power supply, and a second power supply is inserted between a negative electrode of the first power supply and a Ni mesh electrode (reference numeral 42B in FIG. 5). Furthermore, a new Pt mesh electrode (reference numeral 43 in FIG. 5) is connected to the negative electrode of the first power supply, and is disposed in contact with the electrolyte membrane in the Li recovery chamber. The distance between the two electrodes in the Li recovery chamber is 55 mm. As in Example 1, a $LiClO_4$ non-aqueous solution is fed into the Li supply chamber, and an LiOH aqueous solution is fed into the first electrode chamber and the Li recovery chamber.

(Lithium Recovery Experiment)

A DC voltage of 2 V is continuously applied by the first power supply, and a DC voltage of 5 V is continuously applied by the second power supply. The transition in current value is measured with the ammeter. FIG. 24 shows the transition in current value and the migration amount of $Li^+$ per hour, calculated by using the current value as $Li^+$ that has migrated.

As shown in FIG. 24, a sufficient current flows stably in the lithium recovery device according to Example 3 of the present invention, as in Example 1, suggesting that the electrodialysis causes $Li^+$ in the Li-containing non-aqueous solution to migrate to the water (LiOH aqueous solution) in the Li recovery chamber. It also suggests that about three times as much $Li^+$ as in Example 1 migrates per hour. As a result, the recovery rate can be increased. The current value also gradually increases over time. This is presumably because of a temperature increase in the electrolyte membrane.

It is confirmed from above that, as in the first embodiment, the lithium recovery device and the lithium recovery method according to the second embodiment of the present invention can stably recover Li using a non-aqueous solution having $Li^+$ together with other cations dissolved in an organic solvent as a Li source, without decomposing the organic solvent. It is also confirmed that providing the two electrodes in the Li recovery chamber can increase the recovery rate, as with the device for recovering Li contained in an aqueous solution (see Patent Literature 3).

[Experiment 4]

For the lithium recovery device and the lithium recovery method according to the modification of the first embodiment of the present invention shown in FIG. 3, lithium migration is observed.

The lithium recovery device according to Example 1 of Experiment 1 is used. A 1 mol/L LiPF$_6$ non-aqueous solution (solvent: EC and DMC in 1:1 volume ratio) is prepared as a Li source and a Li recovery non-aqueous solution, and fed into the Li supply chamber and the Li recovery chamber. Meanwhile, a 0.1 mol/L LiOH aqueous solution is fed into the first electrode chamber, as in Example 1.

A DC voltage of 10 V is continuously applied by the power supply, with the potential of the negative electrode set at -5 V. After application for 24 hours, it is visually confirmed from outside the processing tank that silver metal lithium has been precipitated on the surface of the Ni mesh electrode in the Li recovery chamber. It is thus confirmed that the lithium recovery device and the lithium recovery method according to the modification of the first embodiment of the present invention can recover metal Li in the Li recovery chamber.

**Reference Signs List**

10, 10A, 10B, 10C multi-chamber lithium recovery device
1, 1A to 1H, 1J, 1K lithium recovery device
11 first electrode chamber (third chamber)
12 Li supply chamber (second chamber)
13 Li recovery chamber (first chamber)
14 second electrode chamber (fourth chamber)
2 electrolyte membrane (lithium ion-conducting electrolyte membrane)
31, 32 ion exchange membrane (first ion-conducting membrane)
33 bipolar membrane (second ion-conducting membrane)
34 anion exchange membrane (second ion-conducting membrane)
41, 41A first electrode
42, 42A, 42B second electrode
43 third electrode
5, 5B power supply
51 first power supply
52 second power supply
7, 7A processing tank
81, 84 water supply device
82, 82A circulation device
83, 83A circulation device
FS Li-containing non-aqueous solution
RS Li recovery aqueous solution (water)
RSA Li recovery non-aqueous solution (organic solvent)
S1, S2 aqueous solution (water)

**Claims**

1. A lithium recovery device comprising:

    a processing tank partitioned into a first chamber, a second chamber, and a third chamber in this order;
    a lithium ion-conducting electrolyte membrane that partitions the processing tank into the first chamber and the second chamber;
    a first ion-conducting membrane that partitions the processing tank into the second chamber and the third chamber;
    a first electrode provided in the third chamber;
    a second electrode provided in a partitioned chamber at an end opposite to the third chamber in the processing tank; and
    a power supply having a positive electrode connected to the first electrode and a negative electrode connected to the second electrode, wherein

lithium ions migrate from a non-aqueous solution containing lithium ions stored in the second chamber to water or an organic solvent stored in the first chamber,
the first ion-conducting membrane conducts at least one type of cations other than lithium ions or at least one type of anions that are water-soluble and contained in the non-aqueous solution, and
the third chamber stores water.

2. The lithium recovery device according to claim 1, further comprising:

a second ion-conducting membrane that partitions the processing tank into the first chamber and a fourth chamber, and does not conduct lithium ions, wherein
the second electrode is provided in the fourth chamber, and
the fourth chamber stores water.

3. A lithium recovery device comprising:

a processing tank partitioned into a second chamber, a first chamber, and a third chamber in this order;
a lithium ion-conducting electrolyte membrane that partitions the processing tank into the first chamber and the second chamber;
a second ion-conducting membrane that does not conduct lithium ions and partitions the processing tank into the first chamber and the third chamber;
a first electrode provided in the second chamber;
a second electrode provided in the third chamber; and
a power supply having a positive electrode connected to the first electrode and a negative electrode connected to the second electrode, wherein
lithium ions migrate from a non-aqueous solution containing lithium ions stored in the second chamber to water or an organic solvent stored in the first chamber,
the third chamber stores water, and
the second chamber also stores water.

4. The lithium recovery device according to claim 2 or 3, wherein

the first chamber stores an organic solvent,
the chamber of the processing tank where the second electrode is provided stores an aqueous solution in which anions soluble in the organic solvent are dissolved, and
the second ion-conducting membrane conducts the anions.

5. The lithium recovery device according to claim 1, wherein

the first chamber stores an organic solvent, and
the power supply applies a voltage such that a potential of the second electrode is lower than or equal to a lithium ion reduction potential.

6. The lithium recovery device according to any one of claims 1 to 4, wherein

the power supply includes a first power supply and a second power supply connected in series in this order from a positive side,
the lithium recovery device further comprising:

a third electrode connected to a negative electrode of the first power supply, spaced apart from the second electrode, and disposed in contact with or facing a surface of the lithium ion-conducting electrolyte membrane on the first chamber side, wherein
the first chamber stores an organic solvent having anions dissolved or water therein.

7. A lithium recovery method for moving lithium ions contained in a non-aqueous solution stored in a second chamber to water or an organic solvent stored in a first chamber which is partitioned into the first chamber and the second chamber in a processing tank by a lithium ion-conducting electrolyte membrane, wherein

the processing tank is further partitioned into the second chamber and a third chamber by a first ion-conducting membrane that conducts at least one type of cations other than lithium ions, or at least one type of anions that are water-soluble and contained in the non-aqueous solution,
the third chamber stores water, and
a power supply connected with a first electrode provided in the third chamber as a positive electrode applies a voltage between the first electrode and a second electrode provided in a partitioned chamber at an end opposite to the third chamber in the processing tank.

8. A lithium recovery method for moving lithium ions contained in a non-aqueous solution stored in a second chamber to water or an organic solvent stored in a first chamber which is partitioned into the first chamber and the second chamber in a processing tank by a lithium ion-conducting electrolyte membrane, wherein

the second chamber also stores water, and
a power supply connected with a first electrode provided in the second chamber as a positive electrode applies a voltage between the first electrode and a second electrode provided in a partitioned chamber at an end opposite to the second chamber in the processing tank.

9. The lithium recovery method according to claim 7 or 8, wherein

the processing tank is further partitioned into the first chamber and a fourth chamber by a second ion-conducting membrane that does not conduct lithium ions,
the second electrode is provided in the fourth chamber, and
the fourth chamber stores water.

10. The lithium recovery method according to claim 9, wherein

the first chamber stores an organic solvent,
the chamber of the processing tank where the second electrode is provided stores an aqueous solution in which anions soluble in the organic solvent are dissolved, and
the second ion-conducting membrane conducts the anions.

11. The lithium recovery method according to claim 7 or 8, wherein

the first chamber stores an organic solvent, and
the power supply applies a voltage such that a potential of the second electrode is lower than or equal to a lithium ion reduction potential.

12. The lithium recovery method according to any one of claims 7 to 10, wherein

the first chamber stores an organic solvent having anions dissolved or water therein,
the power supply includes a first power supply and a second power supply connected in series in this order from a positive side, and
a third electrode spaced apart from the second electrode and disposed in contact with or facing a surface of the lithium ion-conducting electrolyte membrane on the first chamber side is connected to a negative electrode of the first power supply.

13. A multi-chamber lithium recovery device comprising:

two or more lithium ion-conducting electrolyte membranes;
a first ion-conducting membrane disposed at one end side of the lithium ion-conducting electrolyte membrane disposed foremost from the one end;
a second ion-conducting membrane that does not conduct lithium ions and is disposed between the lithium ion-conducting electrolyte membranes;
a processing tank partitioned into five or more chambers by the first ion-conducting membrane, the lithium ion-conducting electrolyte membranes, and the second ion-conducting membrane;
a first electrode disposed in the chamber at the one end, and a second electrode disposed in the chamber at the other end, which are partitioned in the processing tank; and
a power supply having a positive electrode connected to the first electrode and a negative electrode connected to the second electrode, wherein

the partitioned chamber at the one end in the processing tank stores water, and
lithium ions migrate from a non-aqueous solution containing lithium ions stored in one chamber at the one end side of two neighboring chambers partitioned by the lithium ion-conducting electrolyte membrane to water stored in the chamber at the other end.

14. The multi-chamber lithium recovery device according to claim 13, further comprising:

the second ion-conducting membrane that partitions the processing tank between the lithium ion-conducting electrolyte membrane disposed foremost from the other end and the second electrode, wherein
the chamber at the other end of the processing tank partitioned by the second ion-conducting membrane stores water.

15. The multi-chamber lithium recovery device according to claim 13 or 14, wherein

the power supply includes a first power supply and a second power supply connected in series in this order from a positive side,
the multi-chamber lithium recovery device further comprising:
a third electrode connected to a negative electrode of the first power supply, spaced apart from the second electrode, and disposed in contact with or facing a surface on the other end side of the lithium ion-conducting electrolyte membrane disposed foremost from the other end.

16. A lithium recovery method for moving lithium ions from a non-aqueous solution containing lithium ions stored in one chamber of neighboring two chambers partitioned by a lithium-ion-conducting electrolyte membrane to water stored in the other chamber, in a processing tank partitioned into five or more chambers by ion-conducting membranes and lithium ion-conducting electrolyte membranes disposed alternately from one end side, wherein

ion-conducting membranes disposed between the lithium ion-conducting electrolyte membranes do not conduct lithium ions,
the partitioned chamber at the one end in the processing tank stores water,
a power supply connected with a first electrode provided in the partitioned chamber at the one end in the processing tank as a positive electrode applies a voltage between the first electrode and a second electrode provided in the chamber at the other end, and
lithium ions migrate from a non-aqueous solution containing lithium ions stored in one chamber at the one end side of the neighboring two chambers to water stored in the chamber at the other end side.

17. The lithium recovery method according to claim 16, wherein

the processing tank is partitioned by an ion-conducting membrane that does not conduct lithium ions and is disposed between the lithium ion-conducting electrolyte membrane disposed foremost from the other end side and the second electrode, and
the chamber at the other end partitioned by the ion-conducting membrane in the processing tank stores water.

18. The lithium recovery method according to claim 16 or 17, wherein

the power supply includes a first power supply and a second power supply connected in series in this order from the positive side, and
a third electrode is connected to a negative electrode of the first power supply, the third electrode being spaced apart from the second electrode and disposed in contact with or facing a surface on the other end side of the lithium ion-conducting electrolyte membrane disposed foremost from the other end side.

# FIG. 1

## FIG. 2

## FIG. 3

# FIG. 4

# FIG. 5

# FIG. 6

# FIG. 7

# FIG. 8

# FIG. 9

# FIG. 10

## FIG. 11

## FIG. 12

# FIG. 13

# FIG. 14

# FIG. 15

## FIG. 16

## FIG. 17

**FIG. 18**

EP 4 786 654 A1

FIG. 19

FIG. 20

**FIG. 21**

# FIG. 22

## FIG. 23

## FIG. 24

# FIG. 25

# INTERNATIONAL SEARCH REPORT

| International application No. |
|---|
| **PCT/JP2024/034614** |

**A.    CLASSIFICATION OF SUBJECT MATTER**

*C25B 7/00*(2006.01)i; *B01D 61/46*(2006.01)i; *B01D 61/54*(2006.01)i; *B01D 69/02*(2006.01)i; *C02F 1/469*(2023.01)i;
*C22B 3/02*(2006.01)i; *C22B 26/12*(2006.01)i; *C25B 9/00*(2021.01)i; *C25B 13/04*(2021.01)i
FI:   C25B7/00; B01D61/46 500; B01D61/54 500; B01D69/02; C02F1/469; C22B3/02; C22B26/12; C25B9/00 J; C25B13/04
301

According to International Patent Classification (IPC) or to both national classification and IPC

**B.    FIELDS SEARCHED**

Minimum documentation searched (classification system followed by classification symbols)

C25B7/00; B01D61/46; B01D61/54; B01D69/02; C02F1/469; C22B3/02; C22B26/12; C25B9/00; C25B13/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2023/027190 A1 (HIROSAKI UNIVERSITY) 02 March 2023 (2023-03-02) paragraphs [0059]-[0060], fig. 4 | 1,6 |
| A | entire text | 2-5, 7-18 |
| A | JP 2017-75398 A (CALERA CORPORATION) 20 April 2017 (2017-04-20) entire text | 1-18 |
| A | WO 2010/061804 A1 (HONDA MOTOR CO., LTD.) 03 June 2010 (2010-06-03) entire text | 1-18 |

☐ Further documents are listed in the continuation of Box C.        ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **20 November 2024** | **03 December 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/034614**

| Patent document cited in search report | | | Publication date (day/month/year) | Patent family member(s) | | | Publication date (day/month/year) |
|---|---|---|---|---|---|---|---|
| WO | 2023/027190 | A1 | 02 March 2023 | EP | 4393569 | A1 | |
| | | | | fig. 4 | | | |
| | | | | CN | 117881633 | A | |
| | | | | CL | 2024000576 | A | |
| JP | 2017-75398 | A | 20 April 2017 | US | 2012/0292196 | A1 | |
| | | | | entire text | | | |
| | | | | WO | 2012/158969 | A1 | |
| | | | | TW | 201313958 | A | |
| | | | | CN | 103238233 | A | |
| | | | | KR | 10-2014-0048888 | A | |
| WO | 2010/061804 | A1 | 03 June 2010 | US | 2011/0225956 | A1 | |
| | | | | entire text | | | |
| | | | | EP | 2360361 | A1 | |
| | | | | CN | 102224328 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6233877 B
- JP 2019141807 A
- JP 2022239864 A

**Non-patent literature cited in the description**

- **KUNUGI S. ; INAGUMA Y. ; ITOH M.** Electrochemical recovery and isotope separation of lithium ion employing lithium ion conductive perovskite-type oxides. *Solid State Ionics*, July 1999, vol. 122 (1-4), 35-39